# EUROPÄISCHE PATENTSCHRIFT

(11) **EP 1 499 811 B1**
(45) Veröffentlichungstag und Bekanntmachung des Hinweises auf die Patenterteilung: **24.10.2007**
(21) Anmeldenummer: 03727195.4
(22) Anmeldetag: 10.04.2003
(51) Int. Cl.: F16D 13/75, F16D 13/71, F16D 13/58

(54) **KUPPLUNGSAGGREGAT**
CLUTCH UNIT
GROUPE D'EMBRAYAGE

(30) Priorität: 10.04.2002 DE 10215715; 13.09.2002 DE 10242595
(43) Veröffentlichungstag der Anmeldung: 26.01.2005
(60) Teilanmeldung: 06015665.0
(73) Patentinhaber: LuK Lamellen und Kupplungsbau Beteiligungs KG, 77815 Bühl (DE)
(72) Erfinder: LANG, Volker, 77886 Lauf (DE); MAIER, Stefan, 77889 Seebach (DE); RABER, Christoph, 66564 Ottweiler-Steinbach (DE); LIEBERMANN, Tom, 77815 Bühl (DE); RUDKOSKI, Guido, 77815 Bühl (DE); MAN, Lászlo, 77833 Ottersweier-Unzhurst (DE); MEINHARD, Rolf, 77815 Bühl (DE); KERN, Ottmar, 76133 Karlsruhe (DE); BENETON, Sebastien, F-67800 Hoenheim (FR); KIMMIG, Karl-Ludwig, 77883 Ottenhöfen (DE); REIK, Wolfgang, 77815 Bühl (DE); WUHRER, Alexander, 77815 Bühl (DE); REIMNITZ, Dirk, 77815 Bühl (DE)
(86) Internationale Anmeldenummer: PCT/DE2003/001199
(87) Internationale Veröffentlichungsnummer: WO 2003/087608

(56) Entgegenhaltungen:
- EP-A- 0 693 631
- DE-A- 4 414 471
- DE-A- 19 755 713
- DE-C- 4 244 919
- FR-A- 2 728 637
- FR-A- 2 809 147
- US-A- 6 016 897
- US-A- 6 123 180

## Beschreibung

Die Erfindung betrifft ein Kupplungsaggregat zur Drehmomentübertragung zwischen einem Motor und einem Getriebe, mit mindestens einer Reibungskupplung, insbesondere für Kraftfahrzeuge, mit einer Druckplatte, die drehfest, jedoch axial begrenzt verlagerbar in einem Gehäuse angeordnet ist, wobei zwischen Gehäuse und Druckplatte eine Tellerfeder wirksam ist, durch welche die Druckplatte in Richtung einer zwischen dieser und einer Gegendruckplatte einklemmbaren Kupplungsscheibe mit Reibbelägen beaufschlagbar, und die Kupplung über Betätigungsmittel ein- und ausrückbar ist, und mit einer den Verschleiß wenigstens der Reibbeläge der Kupplungsscheibe selbsttätig kompensierenden Nachstelleinrichtung, wobei an der Druckplatte mindestens ein Stift insbesondere in einer Richtung axial bewegbar gelagert ist, dessen Länge so gewählt ist, dass er im eingerückten Zustand der Kupplung mit einem Ende an der Gegendruckplatte und im ausgerückten Zustand der Kupplung an dem Gehäuse anliegt. Ein solches Kupplungsaggregat ist durch die FR 2809147A bekannt geworden.

Im Betrieb der Reibungskupplung werden die Reibbeläge mechanisch stark beansprucht, was zu Verschleiß derselben führt. Mit zunehmendem Verschleiß der Reibbeläge verringert sich der Abstand zwischen der Druckplatte und der Gegendruckplatte. Das führt dazu, dass sich die Position der an der Druckplatte anliegenden Tellerfeder beziehungsweise von Hebelarmen, die an der Tellerfeder ausgebildet sind, mit zunehmendem Verschleiß der Reibbeläge ebenfalls ändert. Dadurch wird der Betrieb des Kupplungsaggregats in unerwünschter Weise beeinflusst.

Aufgabe der Erfindung ist es, ein Kupplungsaggregat mit einer Reibungskupplung der eingangs geschilderten Art zu schaffen, bei welcher die Position des radial innen liegenden Bereichs der Tellerfeder über den Verschleiß insbesondere der Reibbeläge konstant bleibt. Darüber hinaus soll das erfindungsgemäße Kupplungsaggregat einfach aufgebaut und kostengünstig herstellbar sein.

Die Aufgabe ist bei einem Kupplungsaggregat zur Drehmomentübertragung der eingangs beschriebenen Art dadurch gelöst, dass an dem dem Gehäuse zugewandten Ende des Stiftes ein Bügel befestigt ist, dessen freies Ende zwischen der Tellerfeder und dem Gehäuse angeordnet ist. Der Bügel verhindert ein unerwünschtes Nachstellen der Tellerfeder, zum Beispiel aufgrund von Schwingungen beim Transport der Kupplung vor dem Einbau. Die Lagerung des Stiftes kann zum Beispiel mit Hilfe einer Kunststoffhülse als gezielte Reibpaarung oder als Spielpassung nach dem Klettermax-Prinzip ausgeführt sein. Entscheidend ist, dass der Stift nur in einer Richtung bewegbar ist. Mit zunehmendem Verschleiß der Reibbeläge an der Kupplungsscheibe wird der Stift durch die Anpresskraft der Druckplatte axial zum Gehäuse hin verschoben. Das Gehäuse wird insbesondere von einem Kupplungsdeckel gebildet. Der axiale Weg des Stiftes entspricht dem Betrag des Verschleißes der Reibbeläge. Beim nächsten Ausrückvorgang wird der Weg der Druckplatte durch das Anstehen des Stiftes am Gehäuse begrenzt. Aufgrund eines geringen Rückstellmoments schwenkt die Tellerfeder bis sie innen am Gehäuse, insbesondere an einem dort vorgesehenen Anschlag, zur Anlage kommt. Dadurch entsteht ein Spiel zwischen der Tellerfeder und der Druckplatte, das mit Hilfe der Nachstelleinrichtung beseitigt werden kann. Der Stift wirkt sozusagen als Verschleißsensor.

Ein bevorzugtes Ausführungsbeispiel des Kupplungsaggregats ist dadurch gekennzeichnet, dass die Nachstelleinrichtung ein Verstellring-Rampensystem umfasst. Das Verstellring-Rampensystem dient dazu, das aufgrund von Verschleiß der Reibbeläge auftretende Spiel zwischen Tellerfeder und Druckplatte auszugleichen.

Ein weiteres bevorzugtes Ausführungsbeispiel des Kupplungsaggregats ist dadurch gekennzeichnet, dass im äußeren Randbereich der Tellerfeder mindestens eine Durchgangsöffnung vorgesehen ist, durch die ein Bolzen ragt, der an dem Gehäuse befestigt ist. Die Abmessungen von Bolzen und Bohrung sind so gewählt, dass die Tellerfeder im eingebauten beziehungsweise verspannten Zustand nach dem Klettermax-Prinzip gegen axiale Verschiebung in einer Richtung verklemmt ist.

Ein weiteres bevorzugtes Ausführungsbeispiel des Kupplungsaggregats ist dadurch gekennzeichnet, dass im äußeren Randbereich der Tellerfeder mindestens eine in axialer Richtung vorgespannte Druckfeder zwischen der Tellerfeder und dem Gehäuse eingespannt ist. Mit zunehmendem Verschleiß der Reibbeläge vergrößert sich der axiale Weg des Betätigungsorgans beim Einrücken der Kupplung. Wenn der axiale Weg zur Übertragung des maximalen Drehmoments zu groß wird, dann muss das Betätigungsorgan beim nächsten Ausrücken der Kupplung einen sogenannten Einstellhub fahren. Einstellhub bedeutet, dass das Betätigungsorgan einen zusätzlichen Auskuppelweg in Richtung Getriebe zurücklegt. Dadurch wird die Verklemmung der Tellerfeder an dem Bolzen reduziert. Durch die zwischen der Tellerfeder und dem Gehäuse eingespannte Druckfeder wird die Tellerfeder axial in Richtung Gegendruckplatte verschoben bis die Tellerfeder wieder an der Druckplatte anliegt. Der Stift hat dabei die gleiche Funktion wie bei den vorab beschriebenen Ausführungsbeispielen.

Ein weiteres bevorzugtes Ausführungsbeispiel des Kupplungsaggregats ist dadurch gekennzeichnet, dass innen an dem Gehäuse ein Anschlag für die Tellerfeder im ausgerückten Zustand vorgesehen ist. Die Tellerfeder kommt aufgrund ihrer Vorspannung beim Ausrücken der Kupplung an dem Anschlag am Gehäuse, insbesondere am Kupplungsdeckel, zur Anlage. Das sich dabei ergebende Spiel zwischen Tellerfeder und Druckplatte entspricht dem Verschleiß der Reibbeläge und kann durch das Verstellring-Rampensystem ausgeglichen werden.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im einzelnen beschrieben sind.
- Figur 1: eine Reibungskupplung gemäß einer ersten Ausführungsform in der Draufsicht;
- Figur 2: die Ansicht eines Schnitts entlang der Linie II-II in Figur 1;
- Figur 3: die Ansicht eines Schnitts entlang der Linie III-III in Figur 1;
- Figur 4: eine Reibungskupplung gemäß einer zweiten Ausführungsform in der Draufsicht;
- Figur 5: die Ansicht eines Schnitts entlang der Linie V-V in Figur 4;
- Figur 6: die Ansicht eines Schnitts entlang der Linie VI-VI in Figur 4;
- Figur 7: eine Reibungskupplung gemäß einer dritten Ausführungsform in der Draufsicht;
- Figur 8: die Ansicht eines Schnitts entlang der Linie VIII-VIII in Figur 7;
- Figur 9: die Ansicht eines Schnitts entlang der Linie IX-IX in Figur 7;
- Figur 10: eine Reibungskupplung gemäß einem vierten Ausführungsbeispiel in der Draufsicht;
- Figur 11: die Ansicht eines Schnitts entlang der Linie XI-XI in Figur 10;
- Figur 12: die Ansicht eines Schnitts entlang der Linie XII-XII in Figur 10;
- Figur 13: eine Reibungskupplung gemäß einer fünften Ausführungsform im Schnitt;
- Figur 14: die Reibungskupplung aus Figur 13 in einem winkelversetzten Schnitt;
- Figur 15: einen vergrößerten Ausschnitt aus Figur 13. in einer anderen Ansicht;
- Figur 16: ein Kraft-Weg-Diagramm mit verschiedenen Kennlinien, aus denen das Zusammenwirken einzelner Feder- und Nachstellelemente der in den Figuren 13 bis 15 dargestellten Reibungskupplung zu entnehmen ist;
- Figur 17: eine Reibungskupplung gemäß einer sechsten Ausführungsform in der Draufsicht;
- Figur 18: die Ansicht eines Schnitts entlang der Linie XVIII-XVIII in Figur 17;
- Figur 19: ein Kraft-Weg-Diagramm mit verschiedenen Kennlinien, aus denen das Zusammenwirken einzelner Feder- und Nachstellelemente der in den Figuren 17 und 18 dargestellten Reibungskupplung zu entnehmen ist;
- Figur 20: eine Reibungskupplung gemäß einer siebten Ausführungsform in der Draufsicht;
- Figur 21: die Ansicht eines Schnitts entlang der Linie XXI-XXI in Figur 20;
- Figur 22: die Ansicht eines Schnitts entlang der Linie XXII-XXII in Figur 20;
- Figur 23: ein Kraft-Weg-Diagramm mit verschiedenen Kennlinien, aus denen das Zusammenwirken einzelner Feder- und Nachstellelemente der in den Figuren 20 bis 22 dargestellten Reibungskupplung zu entnehmen ist;
- Figur 24: eine Reibungskupplung gemäß einer achten Ausführungsform im Schnitt;
- Figur 25: die Reibungskupplung aus Figur 24 in einem winkelversetzten Schnitt;
- Figur 26: eine Reibungskupplung gemäß einer neunten Ausführungsform in der Draufsicht;
- Figur 27: die Ansicht eines Schnitts entlang der Linie XXVII-XXVII in Figur 26;
- Figur 28: die Ansicht eines Schnitts entlang der Linie XXVIII-XXVIII in Figur 26;
- Figur 29: eine Reibungskupplung gemäß einer zehnten Ausführungsform im Schnitt;
- Figur 30: die Reibungskupplung aus Figur 29 in einem winkelversetzten Schnitt;
- Figur 31: ein Kraft-Weg-Diagramm mit verschiedenen Kennlinien, aus denen das Zusammenwirken einzelner Feder- und Nachstellelemente der in den Figuren 29 und 30 dargestellten Reibungskupplung zu entnehmen ist;
- Figur 32: eine Reibungskupplung gemäß einer elften Ausführungsform im Schnitt;
- Figur 33: die Reibungskupplung aus Figur 32 in einem winkelversetzten Schnitt;
- Figur 34: ein Kraft-Weg-Diagramm mit verschiedenen Kennlinien, aus denen das Zusammenwirken einzelner Feder- und Nachstellelemente der in den Figuren 32 und 33 dargestellten Reibungskupplung zu entnehmen ist;
- Figur 35: eine Reibungskupplung gemäß einer zwölften Ausführungsform im Schnitt;
- Figur 36: die Reibungskupplung aus Figur 35 in einem winkelversetzten Schnitt;
- Figur 37: ein Kraft-Weg-Diagramm mit verschiedenen Kennlinien, aus denen das Zusammenwirken einzelner Feder- und Nachstellelemente der in den Figuren 35 und 36 dargestellten Reibungskupplung zu entnehmen ist;
- Figuren 38 bis 41: eine Reibungskupplung gemäß einer dreizehnten Ausführungsform im Schnitt in verschiedenen Stellungen und Verschleißzuständen;
- Figuren 42 und 43: Kraft-Weg-Diagramme mit verschiedenen Kennlinien, aus denen das Zusammenwirken einzelner Feder- und Nachstellelemente der in Figur 44 dargestellten Reibungskupplung zu entnehmen ist;
- Figur 44: eine Reibungskupplung gemäß einer vierzehnten Ausführungsform im Schnitt;
- Figur 45: ein Kraft-Weg-Diagramm mit verschiedenen Kennlinien, aus denen das Zusammenwirken zweier Federelemente der in Figur 46 dargestellten Reibungskupplung zu entnehmen ist;
- Figur 46: eine Reibungskupplung gemäß einer fünfzehnten Ausführungsform im Schnitt;
- Figur 47: ein Kupplungsaggregat gemäß einer weiteren Ausführungsform im Schnitt mit zwei Kupplungen;
- Figur 48: einen Ausschnitt eines winkelversetzten Schnitts des in Figur 47 dargestellten Kupplungsaggregats;
- Figur 49: das Kupplungsaggregat aus Figur 47 mit beiden Kupplungen im geöffneten Zustand;
- Figur 50: das Kupplungsaggregat aus Figur 47 mit beiden Kupplungen im geschlossenen Zustand;
- Figuren 51 bis 53: einfach zugedrückte Reibungskupplungen gemäß weiterer Ausführungsformen im Schnitt;
- Figur 54: eine zugedrückte Doppelkupplung gemäß einer weiteren Ausführungsform im Schnitt;
- Figur 55: eine einfach zugezogene Reibungskupplung gemäß einer weiteren Ausführungsform im Schnitt;
- Figur 56: eine Reibungskupplung gemäß einer weiteren Ausführungsform im Schnitt;
- Figur 57: eine Reibungskupplung gemäß einer weiteren Ausführungsform bei normaler Betätigung;
- Figur 58: einen Ausschnitt aus Figur 57 beim Detektieren von Verschleiß;
- Figur 59: einen Ausschnitt aus Figur 57 beim Nachstellen;
- Figur 60: eine Reibungskupplung gemäß einer weiteren Ausführungsform im Schnitt;
- Figuren 61 bis 64: vier verschiedene Varianten für Axialfreiläufe zur Verschleißnachnachstellung;
- Figuren 65 bis 69: Reibungskupplungen gemäß weiterer Ausführungsformen im Schnitt;
- Figur 70: Text hierzu fehlt noch

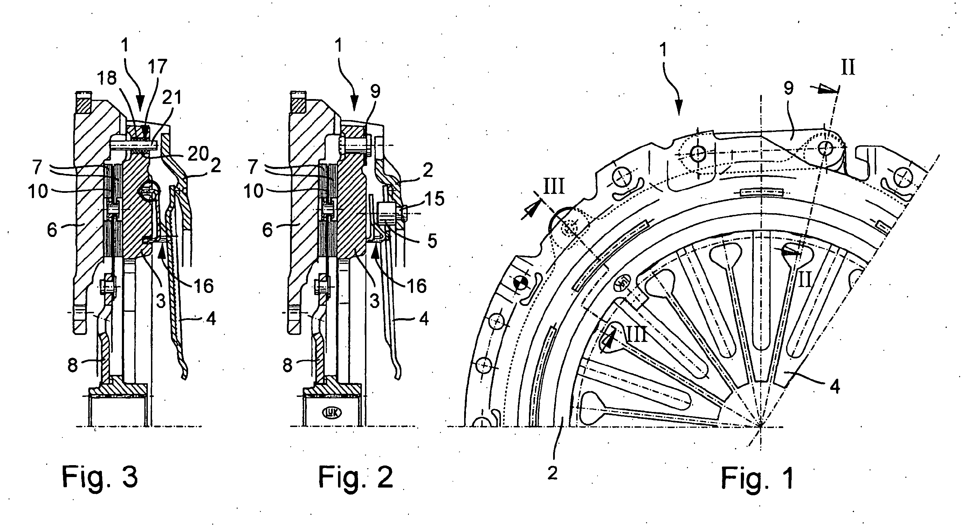

In den Figuren 1 bis 3 ist eine Reibungskupplung 1 gemäß einer ersten Ausführungsform mit einem Gehäuse 2, dargestellt. Das Gehäuse 2 wird auch als Kupplungsdeckel bezeichnet. Eine Druckplatte 3, die auch als Druckscheibe oder Anpressplatte bezeichnet wird, ist drehfest mit dem Gehäuse 2 verbunden, jedoch axial begrenzt verlagerbar. Axial zwischen der Druckplatte 3 und dem Kupplungsdeckel 2 ist eine Anpresstellerfeder 4 verspannt, die um eine vom Gehäuse 2 getragene ringartige Schwenklagerung 5 verschwenkbar ist und die Druckplatte 3 in Richtung einer mit dem Gehäuse 2 fest verbundenen Gegendruckplatte 6, wie zum Beispiel einem Schwungrad, beaufschlagt, wodurch Reibbeläge 7 einer Kupplungsscheibe 8 zwischen den Reibflächen der Druckscheibe 3 und der Gegendruckplatte 6 eingespannt werden.

Die Druckplatte 3 ist mit dem Kupplungsdeckel 2 über in Umfangsrichtung beziehungsweise tangential gerichtete Anlenkmittel in Form von Blattfedem 9 drehfest verbunden. Bei dem dargestellten Ausführungsbeispiel besitzt die Kupplungsscheibe 8 sogenannte Belagfedersegmente 10, die einen progressiven Drehmomentaufbau beim Einrücken der Reibungskupplung gewährleisten, indem sie über eine begrenzte axiale Verlagerung der beiden Reibbeläge 7 in Richtung aufeinander zu einen progressiven Anstieg der auf die Reibbeläge 7 einwirkenden Axialkräfte ermöglichen. Es könnte jedoch auch eine Kupplungsscheibe verwendet werden, bei der die Reibbeläge 7 axial praktisch starr auf wenigstens eine Trägerscheibe aufgebracht wären.

Bei dem dargestellten Ausführungsbeispiel besitzt die Tellerfeder 4 einen die Anpresskraft aufbringenden ringförmigen Grundkörper, von dem radial nach innen hin verlaufende Betätigungszungen ausgehen. Die Tellerfeder 4 ist dabei derart eingebaut, dass sie mit radial weiter außen liegenden Bereichen die Druckplatte 3 beaufschlagt und mit radial weiter innen liegenden Bereichen um die Schwenklagerung 5 kippbar ist. Zur Drehsicherung der Betätigungstellerfeder 4 sind Haltemittel in Form von Nietelementen 15? am Deckel befestigt, die sich jeweils mit einem axial sich erstreckenden Schaft durch einen zwischen benachbarten Tellerfederzungen vorgesehenen Ausschnitt erstrecken.

Die Kupplung 1 besitzt eine den axialen Verschleiß an den Reibflächen der Druckscheibe 3 und der Gegendruckplatte 6 sowie der Reibbeläge 7 kompensierende Nachstellvorkehrung, die aus einer zwischen Anpresstellerfeder 4 und Druckscheibe 3 vorgesehenen Verschleißkompensationseinrichtung 16 sowie aus den Ausrückweg der Druckscheibe 3 limitierenden Begrenzungsmitteln 17, die als Wegsensor ausgebildet sind, besteht.

Die als Verschleißfühler wirksamen Begrenzungsmittel 17 besitzen jeweils eine Buchse 18, die in einer Bohrung 20 der Druckscheibe 3 drehfest aufgenommen ist. In der Buchse 18 ist ein Stift 21 aufgenommen.

Die Verschleißkompensationseinrichtung 16 dient dazu, die Position der Betätigungstellerfeder 4 über den Verschleiß an der Kupplungsscheibe 2 konstant zu halten. Bei im Rahmen der vorliegenden Erfindung durchgeführten Versuchen hat man festgestellt, dass der Fliehkrafteinfluss des Einrückhebels für die Funktion störend ist. Um diesen Einfluss gering beziehungsweise konstant zu halten, sollte der Einrückhebel über den Verschleiß seine Winkelposition beibehalten, das heißt, er muss axial nachgeführt werden.

Der als Wegsensor dienende Stift 21 ist axial bewegbar in der Buchse 18 gelagert. Der Stift 21 kann sich in der Buchse 18 nur zum Kupplungsdeckel 2 hin bewegen und nicht in umgekehrter Richtung. Die Länge des Stifts 21 ist so abgestimmt, dass ein Ende des Stifts bei eingerückter Kupplung an der Gegendruckplatte 6 ansteht, und das andere Ende des Stifts 21 bei ausgerückter Kupplung an dem Kupplungsdeckel 2 ansteht.

Bei Verschleiß an den Reibbelägen 7, der Druckplatte 3 oder der Gegendruckplatte 6 wird der Stift 21 durch die Anpresskraft axial in Richtung des Kupplungsdeckels 2 verschoben. Der Weg des Stifts 21 entspricht dem Betrag des auftretenden Verschleißes. Beim nächsten Ausrücken der Kupplung wird der Weg der Anpressplatte 3 durch den an dem Kupplungsdeckel 2 zur Anlage kommenden Stift 21 begrenzt. Die Tellerfeder 4 schwenkt aufgrund eines geringen Rückstellmoments bis an einen Anschlag im Innenbereich des Kupplungsdeckels 2. Dadurch entsteht zwischen der Tellerfeder 4 und der Verschleißkompensationseinrichtung 16 ein Spiel. Die Verschleißkompensationseinrichtung 16 ist als Verstellring-Rampensystem ausgebildet. Der Verstellring gleicht über das Rampensystem das auftretende Spiel aus. Dadurch ist gewährleistet, dass die Position der Tellerfederzungen über den Verschleiß konstant bleibt.

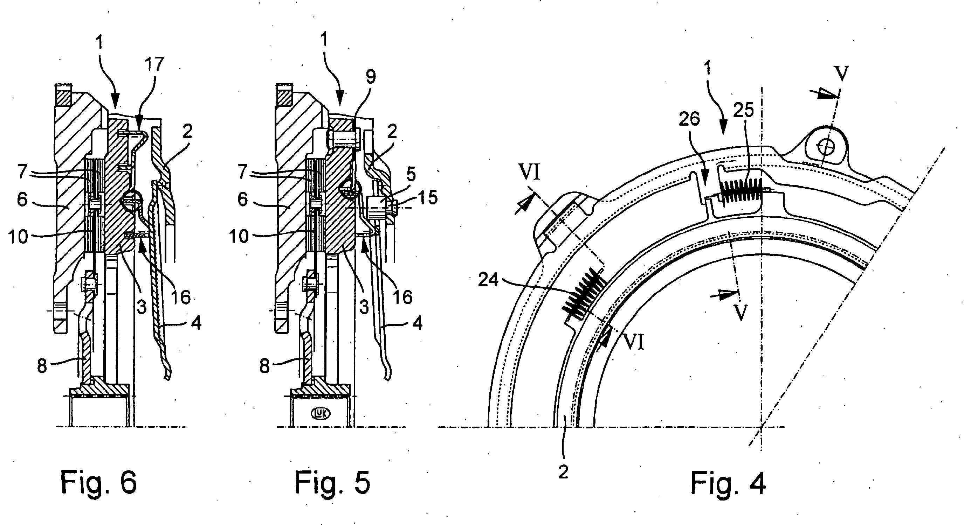

Die in den Figuren 4 bis 41 dargestellten Ausführungsformen 2 bis 13 betreffen ähnliche Reibungskupplungen wie die in den Figuren 1 bis 3 dargestellte Ausführungsform 1. Gleiche Teile sind mit gleichen Bezugszeichen versehen, so dass insofern auf die Beschreibung zu den Figuren 1 bis 3 verwiesen wird. Im Folgenden wird nur auf die Unterschiede zwischen den einzelnen Ausführungen eingegangen.

Auf der dem Kupplungsdeckel 2 zugewandten Seite der Anpressplatte 3 sind zwei miteinander gekoppelte Verstellringe mit Rampensystem 16 und 17 angebracht. Der innere Verstellring 16 ist zwischen der Anpressplatte 3 und der Tellerfeder 4 angeordnet. Der äußere Verstellring 17 ist zwischen dem Kupplungsdeckel 2 und der Anpressplatte 3 angeordnet. Die beiden Verstellringe 16 und 17 sind so miteinander gekoppelt, dass sie relativ zueinander nur einen begrenzten Verdrehweg machen können.

Wenn ein radial innen an der Tellerfeder 4 angreifender Aktor aufgrund eines größeren Verfahrweges Verschleiß erkennt, muss der Aktor beim Auskuppeln solange zurückfahren, bis die Tellerfeder 4 ohne Vorlast an einem (nicht dargestellten) Anschlag am Innenbereich des Kupplungsdeckels 2 anliegt. Der äußere Verstellring 17 ist zwischen der Anpressplatte 3 und dem Kupplungsdeckel 2 eingeklemmt und begrenzt den Weg der Anpressplatte 3. Mit zunehmendem Verschleiß entsteht zwischen der Tellerfeder 4 und dem inneren Verstellring 16 ein Spiel, das dem Verschleiß an der Anpressplatte 3, den Reibbelägen 7 und der Gegendruckplatte 6 entspricht. Durch eine Druckfederkraft in Umfangsrichtung des inneren Verstellrings 16 wird dieses Spiel mit Hilfe des zugehörigen Rampensystems ausgeglichen. Beim nächsten Einrückvorgang der Kupplung wird der äußere Verstellring 17 wieder frei und kann, bedingt durch die Kopplung der beiden Verstellringe, nur den sozusagen gespeicherten Verdrehweg des inneren Verstellrings 16 nachstellen.

Der auftretende Verschleiß kann zum Beispiel durch einen zu großen Verfahrweg des Aktors erkannt werden. Alternativ kann das Nachstellen auch zyklisch erfolgen. In Figur 4 sind die Druckfedem des Verstellring-Rampensystems mit 24 und 25 bezeichnet. Die Kopplung zwischen dem inneren Verstellring 17 und dem äußeren Verstellring ist in Figur 4 bei 26 dargestellt.

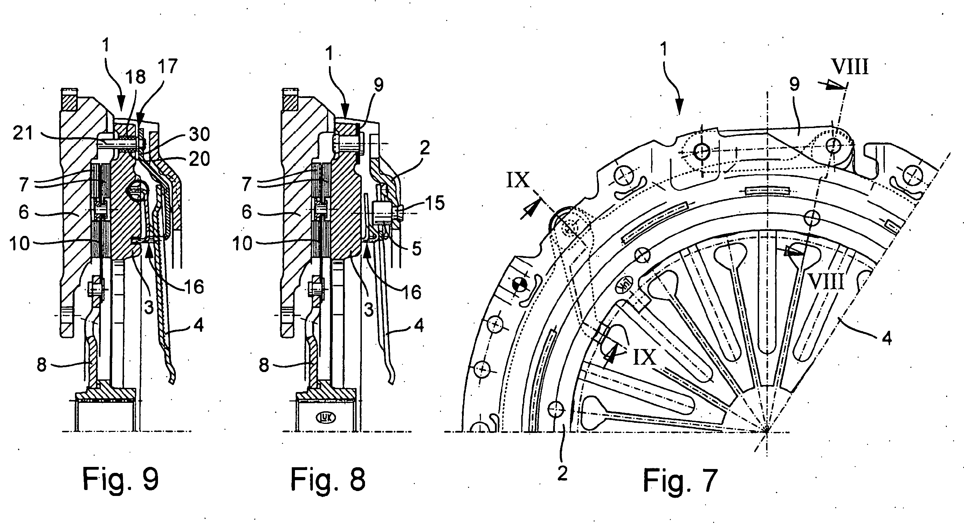

Die in den Figuren 7 bis 9 dargestellte Ausführungsform funktioniert ähnlich wie die in den Figuren 1 bis 3 dargestellte Ausführungsform. Bei der in den Figuren 7 bis 9 dargestellten Ausführungsform wird die Tellerfeder 4 zusätzlich mit einem Bügel 30 eingespannt, der an einem Ende des Stiftes 21 befestigt ist. Der Bügel 30 verhindert ein ungewolltes Nachstellen der Kupplung durch Schwingungen.

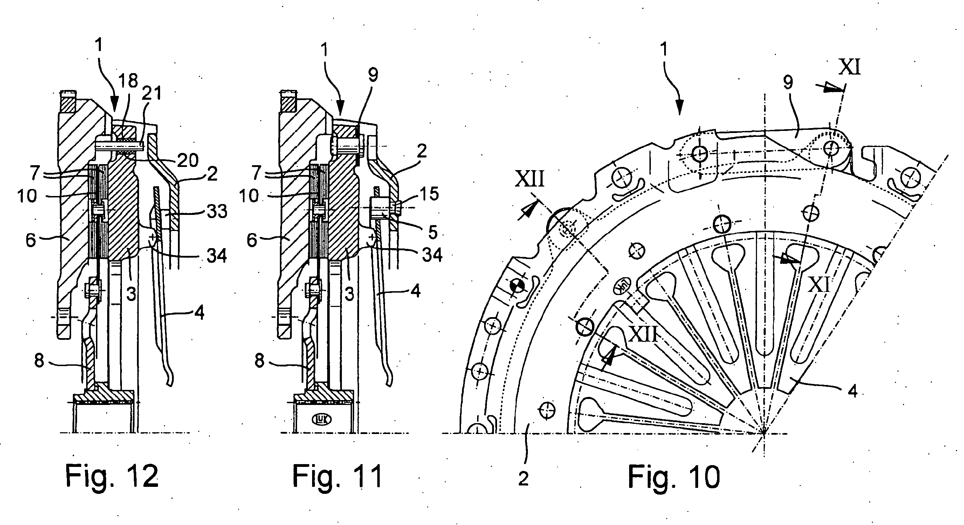

Der in den Figuren 10 bis 12 dargestellte Nachstellmechanismus baut auf dem Klettermax-Prinzip auf. Die Tellerfeder 4 ist über die Schwenklagerung 5 gegen axiale Verschiebung verklemmt. Bei einem zu großen Axialweg des Aktors zur Übertragung des maximalen Motordrehmoments muss der Aktor beim nächsten Auskuppelvorgang einen sogenannten Einstellhub fahren. Einstellhub bedeutet, dass der Aktor oder das Betätigungsorgan einen zusätzlichen Auskuppelweg in Richtung Getriebe fährt. Dadurch wird die Verklemmung an der Schwenklagerung 5 reduziert. Durch eine zwischen dem Kupplungsdeckel 2 und der Tellerfeder 4 angeordnete Druckfeder 33 wird die Tellerfeder 4 axial in Richtung Motor verschoben, bis sie an einem Anpressplattennocken 34 anliegt. Der Weg der Anpressplatte beim Ausrücken wird, wie bei der in den Figuren 1 bis 3 dargestellten Ausführungsform, durch den Wegsensor 21 begrenzt. Bei sämtlichen Ausführungsformen wird davon ausgegangen, dass der Motor auf der Seite der Gegendruckplatte 6 und das Getriebe auf der Seite des Kupplungsdeckels 2 angeordnet ist.

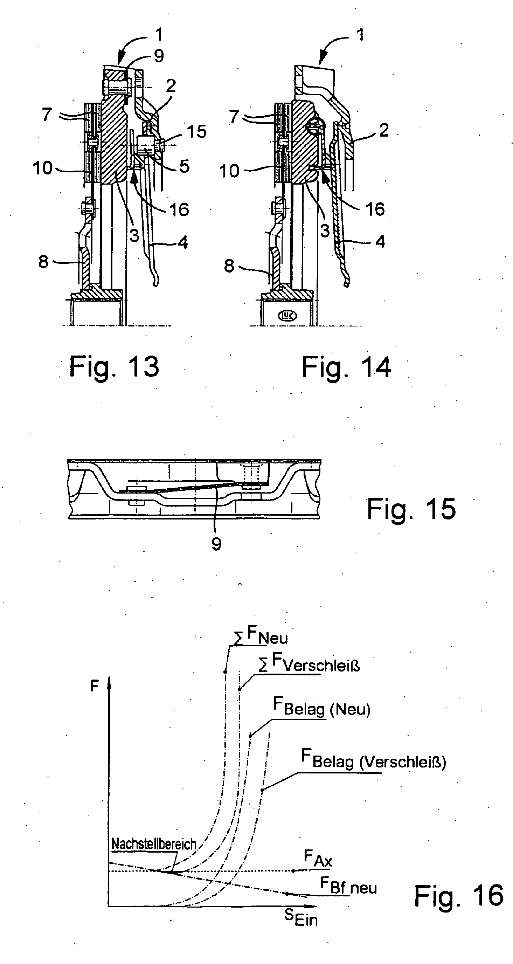

Die in den Figuren 13 bis 15 dargestellte Reibungskupplung arbeitet nach dem sogenannten kraftgesteuerten Nachstellprinzip. Das kraftgesteuerte. Nachstellprinzip basiert auf dem Kräftegleichgewicht beziehungsweise darauf, dass sich das Kräfteniveau über dem Verschleißweg ändert. Bei der kraftgesteuerten Nachstellung wirken die Belagfederung 10 und die degressive Kraft der Blattfedem 9 gegen die Axialkraft, welche durch die Druckfedem des Verstellring-Rampensystems 16 erzeugt werden.

In Figur 16 ist das zu der in den Figuren 13 bis 15 dargestellten Reibungskupplung gehörige Kraft-Weg-Diagramm dargestellt. Im Neuzustand der Kupplung ist die resultierende Kraft aus Belagfederung 10 und Blattfedem 9 größer als die Axialkraft, das heißt, der Verstellring ist zwischen der Druckplatte 3 und der Tellerfeder 4 eingeklemmt. Mit zunehmendem Verschleiß nimmt die degressive Kraft der Blattfeder 9 ab und die Belagfederung verschiebt sich bezogen auf den Einrückweg zu einem größeren Weg. Dadurch fällt der Betrag der resultierenden Kraft aus Belagfederung und Blattfedem unter die Axialkraft, und der Verstellring 16 kann den größeren Weg ausgleichen.

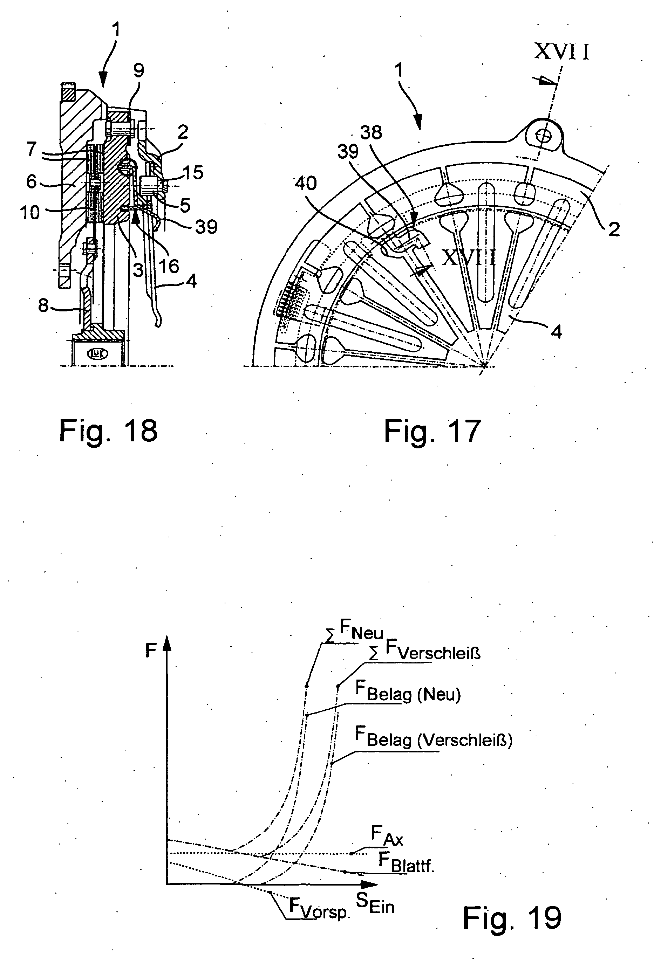

Die in den Figuren 17 und 18 dargestellte Reibungskupplung arbeitet ebenfalls nach dem kraftgesteuerten Nachstellprinzip. Im Unterschied zu der vorangegangenen Ausführungsform funktioniert die Nachstellung bei der in den Figuren 17 und 18 dargestellten Reibungskupplung jedoch winkelgesteuert. Bei der winkelgesteuerten Nachstellung gibt es nur einen definierten Nachstellpunkt. Das Verstellring-Rampensystem 16 kann nur nachstellen, wenn eine Einhängung 38 des Verstellrings 16 in der Tellerfeder 4 freigegeben wird. Zudem muss gewährleistet sein, dass die resultierende Kraft aus Belagfederung 10 und degressiver Blattfeder 9 kleiner ist als die Axialkraft der Druckfedem des Verstellring-Rampensystems 16. Dies ist nur dann der Fall, wenn sich die Belagfederung 10, hervorgerufen durch den Verschleiß der Reibbeläge 7, der Druckplatte 3 oder der Gegendruckplatte 6, zu einem größeren Einrückweg hin verschiebt und die Belagfederung 10 in Folge ihrer degressiven Federkennlinie weniger Kraft hat.

Bei der in den Figuren 17 und 18 dargestellten Reibungskupplung ist das Verstellring-Rampensystem 16 zwischen der Anpressplatte 3 und der Tellerfeder 4 angeordnet. Von dem Verstellring-Rampensystem 16 geht ein Arm 39 aus, der durch eine Aussparung 40 greift, die in der Tellerfeder 4 vorgesehen ist.

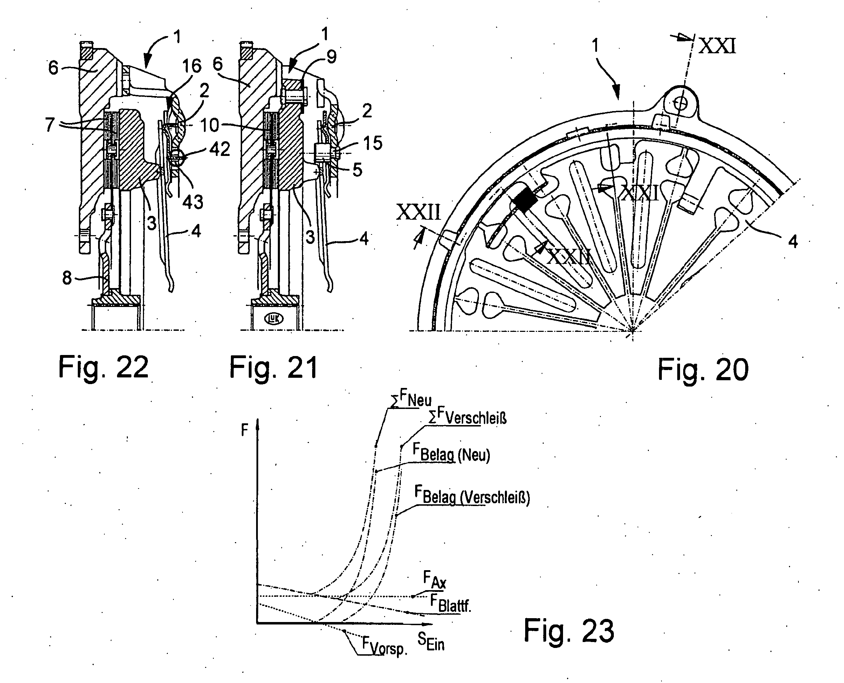

Bei dem in den Figuren 20 bis 22 dargestellten Ausführungsbeispiel ist das Verstellring-Rampensystem zwischen der Tellerfeder 4 und dem Kupplungsdeckel 2 angeordnet. Von dem Verstellring-Rampensystem 16 geht ein Arm 42 aus, der durch eine Aussparung 43 greift, die in dem Kupplungsdeckel 2 vorgesehen ist. Ansonsten funktioniert die in den Figuren 20 bis 22 dargestellte Reibungskupplung genauso wie die in den Figuren 17 und 18 dargestellte Reibungskupplung.

In den Figuren 19 und 23 sind die zu den beiden in den Figuren 17 bis 18 und 20 bis 22 dargestellten Ausführungsformen gehörigen Kraft-Weg-Diagramme dargestellt.

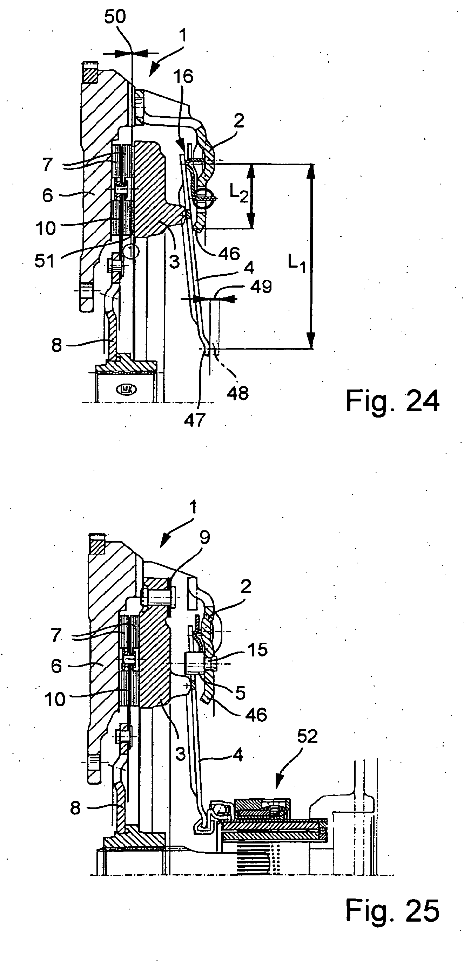

Bei der in den Figuren 24 und 25 dargestellten Reibungskupplung ist das Verstellring-Rampensystem 16 zwischen der Tellerfeder 4 und dem Kupplungsdeckel 2 angeordnet. An dem Kupplungsdeckel 2 ist radial innen zusätzlich ein Anschlag 46 für die Tellerfeder 4 vorgesehen. Die in Figur 24 mit 47 bezeichnete Position der Tellerfeder 4 ergibt sich aus der Position des Deckelanschlags 46. Die Tellerfeder 4 wird durch eigene Vorspannung und mittels der Kräfte der Blattfeder 9 gegen den Anschlag 46 gedrückt. Beim Transport und beim Einbau muss die Blattfederkraft größer als die von dem Verstellring-Rampensystem 16 ausgeübte Axialkraft sein. Die Position der Anpressplatte 3 nach einem Verschleißweg 50 ist bei 51 angedeutet. Die Position 48 gibt die Position der Tellerfederzungen beim Nachstellen eines Verschleißweges 49 an.

Wenn durch eine intelligente Aktorik beim Zudrücken der Kupplung ein erhöhter Betätigungsweg detektiert wird, muss beim nächsten Öffnen der Kupplung ein sogenannter Nachstellhub gefahren werden. Nachstellhub bedeutet, dass der Aktor 52 die Tellerfeder 4 gezielt über die Position 47 hinaus bis auf die Position 48 zieht. Dadurch wird die Hebelfeder 4 in Folge ihrer Anlage am Deckelanschlag 46 um den Verschleißweg 50 von dem Verstellring 16 abgehoben und das Verstellring-Rampensystem kann das Spiel ausgleichen.

Die Position 48 kann wie folgt errechnet werden:

Die Position 48 ergibt sich, indem man zu der Position 47 den Nachstellweg 49 hinzufügt. Der Nachstellweg 49 ergibt sich aus dem Verschleißweg 50 multipliziert mit dem Nachstellhebelwegverhältnis. Das Nachstellhebelwegverhättnis ergibt sich aus dem Verhältnis der Länge L1 zu der Länge L2.

Der benötigte Aktorweg ergibt sich dann, indem man den mit dem Nachstellhebelweg multiplizierten Verschleißbereich mit dem Verschleißbereich und dem Ausrückweg addiert.

Bei der in den Figuren 24 und 25 dargestellten Reibungskupplung kann das Verstellring-Rampensystem 16 nachstellen, sobald die Tellerfeder 4 an dem Anschlag 46 am Kupplungsdeckel 2 anliegt.

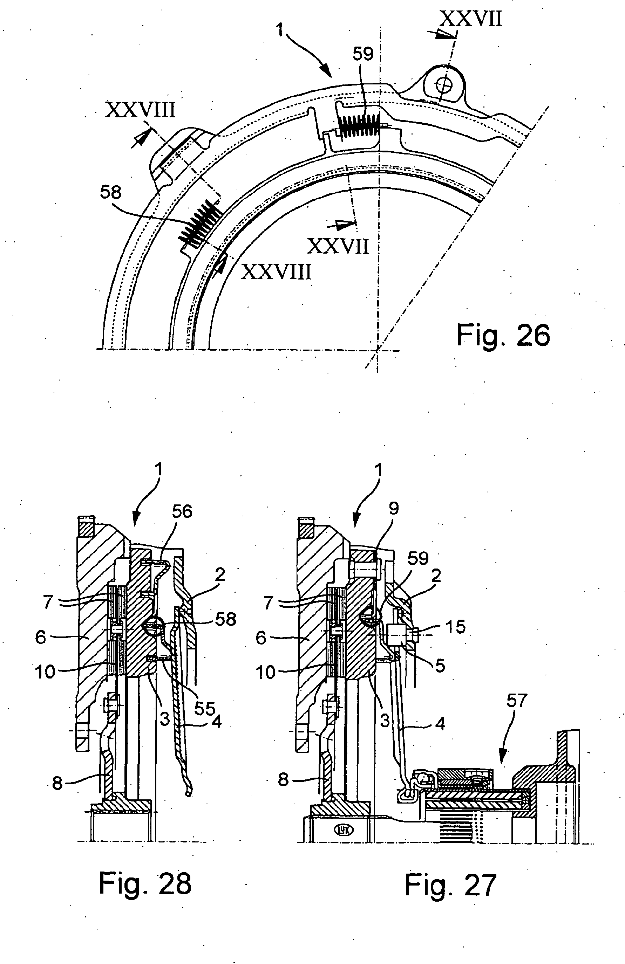

Bei der in den Figuren 26 bis 28 dargestellten Reibungskupplung sind ein innerer Verstellring 55 und ein äußerer Verstellring 56 vorgesehen. Der innere Verstellring 55 ist zwischen der Druckplatte 3 und der Tellerfeder 4 angeordnet. Er dient zur Übertragung der Anpresskraft und zum Nachstellen des Verschleißweges beziehungsweise zum Ausgleich des sich aus dem Verschleiß ergebenden Spiels. Der äußere Verstellring 56 ist zwischen der Druckplatte 3 und dem Kupplungsdeckel 2 angeordnet. Er begrenzt den Nachstellweg des inneren Verstellrings 55 und dient als Wegbegrenzung für die Anpressplatte 3.

Die in den Figuren 26 bis 28 dargestellte Reibungskupplung funktioniert wie folgt: Wenn die Hebelfeder 4 in Richtung Motor eine definierte Winkellage beziehungsweise einen definierten Weg überschreitet, stellt der innere Verstellring beim nächsten Zurückfahren des Aktors 57 soweit nach, wie der äußere Verstellring 56 dies zulässt. Beim folgenden Einrückvorgang wandert der äußere Verstellring 56 aufgrund der Federkräfte der Druckfedem 58 und 59 dem inneren Verstellring 55 nach. Zu diesem Zweck sind die beiden Verstellringe 55 und 56 miteinander gekoppelt.

Ein Nachstellvorgang kann entweder durch zyklisches Zurückfahren des Aktors 57 nach einem bestimmten Zeitintervall beziehungsweise nach einer bestimmten Anzahl Lastwechsel oder durch Detektierung des Verschleißweges und gezieltes. Zurückfahren des Aktors 57 eingeleitet werden.

Bei der Verschleißnachstellung zwischen Hebelfeder 4 und Kupplungsdeckel 2 gilt generell, dass der Verstellring entsprechend mehr Axialweg nachstellen muss als Verschleiß aufgetreten ist, wenn die Zungenhöhe der Tellerfeder 4 konstant gehalten werden soll.

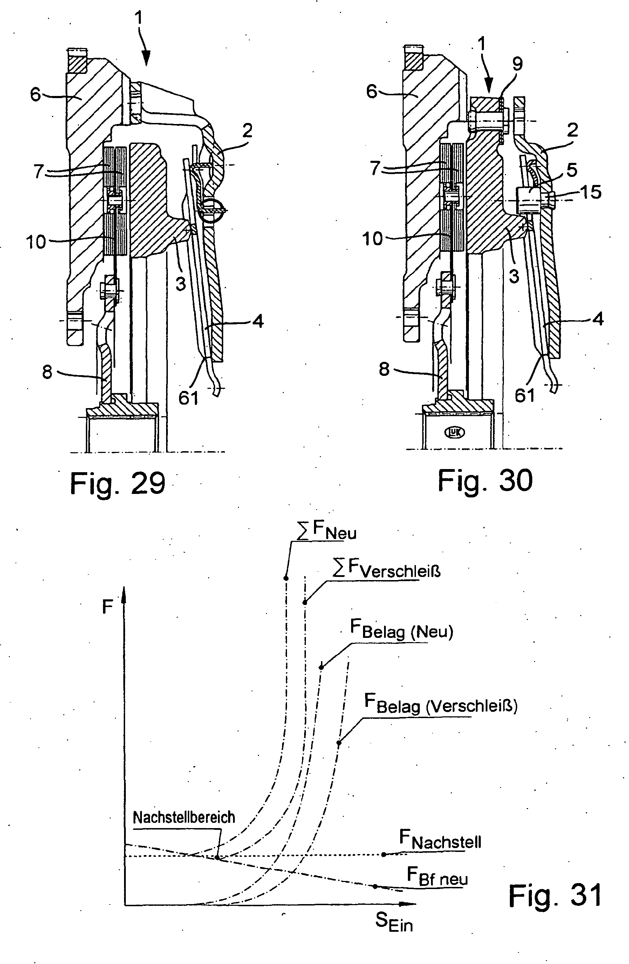

Die in den Figuren 29 bis 41 schematisch dargestellten Verschleißnachstellungsprinzipien können auch bei zugedrückten Kupplungen Anwendung finden. Der Vorteil einer Verschleißnachstellung bei zugedrückten Kupplungen ist, dass sich die Zungenposition des Einrückhebels beziehungsweise der Tellerfeder über den im Betrieb auftretenden Verschleiß nicht ändert. Dadurch kann erstens der Gesamtweg des Einrücklagers klein gehalten werden und zweitens muss weniger Bauraum für den Schwenkwinkel des Einrückhebels vorgehalten werden.

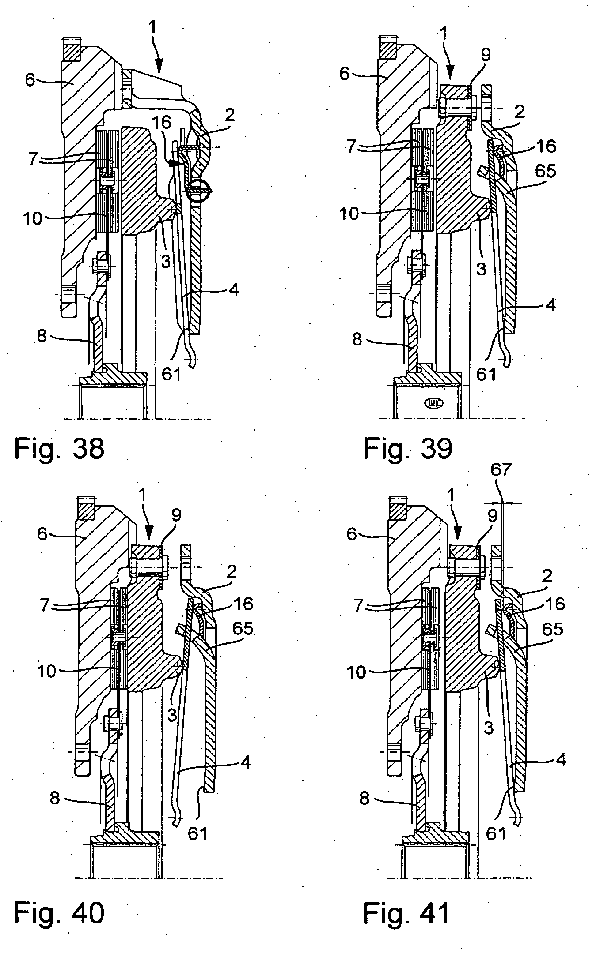

In den Figuren 29 bis 37 sind kraftgesteuerte und in den Figuren 38 bis 41 weggesteuerte Nachstellprinzipien dargestellt, bei denen der Nachstellmechanismus am Gehäuse beziehungsweise am Kupplungsdeckel angebracht ist.

Bei der in den Figuren 29 bis 30 dargestellten Reibungskupplung ist die Druck-platte 3 über degressive Blattfedern 9 mit dem Kupplungsdeckel 2 verbunden. Die Verschleißkompensationseinrichtung 16 umfasst einen Rampenring mit Druckfedern, die denselben verdrehen können. Die Verschleißkompensationseinrichtung 16 ist an dem Kupplungsdeckel 2 befestigt und bildet den äußeren Auflagepunkt der Anpresstellerfeder 4. Der in den Figuren 29 und 30 dargestellte Teil der Anpresstellerfeder 4 wird auch als Einrückhebel bezeichnet. Der Einrückhebel wird über die Nietelemente 15 zentriert. Knapp oberhalb eines (nicht dargestellten) Einrücklagers stützt sich der Einrückhebel an einem Anschlag 61 ab, der radial innen an dem Kupplungsdeckel 2 ausgebildet ist. Durch die Abstützung des Einrückhebels beziehungsweise der Anpresstellerfeder 4 an dem Anschlag 61 des Kupplungsdeckels 2 wird ein Nachstellen der Kupplung, zum Beispiel beim Transport, verhindert.

In Figur 31 ist ein Kraft-Weg-Diagramm zu der in den Figuren 29 und 30 gezeigten Reibungskupplung dargestellt. Beim Einrücken der Reibungskupplung nimmt die Blattfederkraft F_{BF} mit steigendem Einrückweg Sₑᵢₙ ab und somit auch die Abstützkraft vom Einrückhebel 4 auf den Nachstellmechanismus 16. Wenn der Freigang der Kupplung aufgebraucht ist, steigt die Einrückkraft und somit die Abstützkraft auf den Nachstellmechanismus 16 stark an. Solange die Abstützkraft über den Einrückweg größer als die Nachstellkraft ist, wird der Nachstellmechanismus 16 nicht nachstellen. Wenn an der Kupplungsscheibe 8 beziehungsweise den Reibbelägen 7 Verschleiß auftritt, dann wird die Nachstellkraft größer als die Abstützkraft und der Nachstellmechanismus 16, der auch als Verschleißkompensationseinrichtung bezeichnet wird, stellt nach. Die Anpressplatte 3 rückt um den Betrag des aufgetretenen Verschleißes dichter an die Reibbeläge 7 beziehungsweise die Kupplungsscheibe 8 heran. Da der Deckelanschlag 61 nahe bei dem Einrückdurchmesser liegt, ändert sich die Position der an der Anpresstellerfeder 4 ausgebildeten Zungen kaum und der Einrückweg bleibt annähernd konstant.

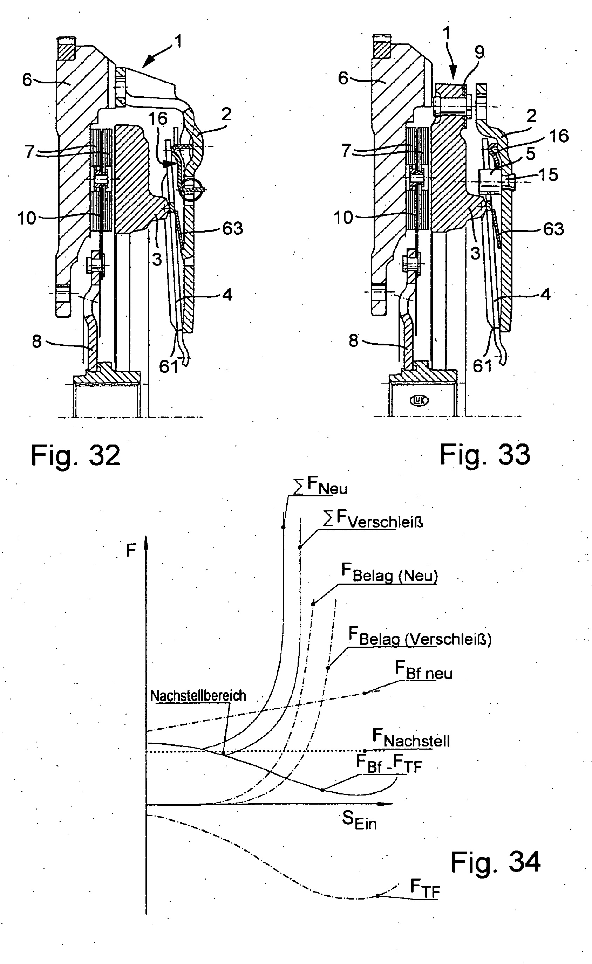

Bei der in den Figuren 32 bis 33 dargestellten Reibungskupplung ist der Kupplungsdeckel 2 über Standard-Blattfedem 9 mit der Anpressplatte 3 verbunden. Als Nachstellmechanismus wird eine Verschleißkompensationseinrichtung 16 eingesetzt, die einen Rampenring mit Druckfedern umfasst, die den Rampenring verdrehen können. Die Verschleißkompensationseinrichtung 16 ist an dem Kupplungsdeckel 2 befestigt und bildet den äußeren Auflagepunkt für den Einrückhebel beziehungsweise die Anpresstellerfeder 4. Der Einrückhebel 4 ist über Bolzen 5 zentriert. Zusätzlich zu einem an dem Kupplungsdeckel 2 vorgesehenen Anschlag 61 ist der Einrückhebel 4 durch eine zusätzliche Tellerfeder 63 abgestützt, die zwischen dem Kupplungsdeckel 2 und dem Einrückhebel 4 angeordnet ist.

In Figur 34 ist ein Kraft-Weg-Diagramm zu der in den Figuren 32 bis 33 gezeigten Reibungskupplung dargestellt. Die Tellerfederkraft F_{TF} muss geringer als die Blattfederkraft F_{BF} sein und die Differenz aus Blattfederkraft und Tellerfederkraft muss größer als die Nachstellkraft F_{Nachstell} sein, damit ein Nachstellen der Kupplung, zum Beispiel in Transportlage, verhindert wird. Beim Einrücken der Kupplung nimmt die Blattfederkraft F_{BF} mit steigendem Einrückweg Sₑᵢₙ zu. Die zusätzliche Tellerfeder 63 ist so eingebaut, dass auch die Tellerfederkraft F_{TF} über den Einrückweg zunimmt. Dabei muss die Kennlinie der Tellerfeder 63 steiler verlaufen als die Kennlinie der Blattfeder 9. Die Differenz aus Blattfederkraft und Tellerfederkraft wirkt als Abstützkraft auf den Nachstellmechanismus 16. Aufgrund der unterschiedlichen Steigungen der Kennlinien nimmt die Differenzkraft und somit die Abstützkraft vom Einrückhebel 4 auf den Nachstellmechanismus 16 mit zunehmendem Einrückweg Sₑᵢₙ ab. Wenn der Freigang der Reibungskupplung aufgebraucht ist, steigt die Einrückkraft -und somit die Abstützkraft auf den Nachstellmechanismus 16-stark an. Solange die Abstützkraft über dem Einrückweg größer als die Nachstellkraft ist, wird der Nachstellmechanismus 16 nicht nachstellen. Tritt nun an der Kupplungsscheibe 8 beziehungsweise den Reibbelägen 7 Verschleiß auf, dann wird die Nachstellkraft großer als die Abstützkraft und der Nachstellmechanismus 16 stellt nach. Die Anpressplatte 3 rückt dann um den Betrag des aufgetretenen Verschleißes dichter an die Kupplungsscheibe 8 beziehungsweise die Reibbeläge 7 heran. Wenn das Einrücksystem immer auf dieselbe Anfangsstellung zurückfährt, bleibt der Schwenkwinkel des Einrückhebels 4 auch ohne Deckelanschlag 61 konstant. Ansonsten muss der Deckelanschlag 61 nahe bei dem Einrückdurchmesser liegen, damit sich die Zungenposition nicht ändert und der Einrückweg annähernd konstant bleibt.

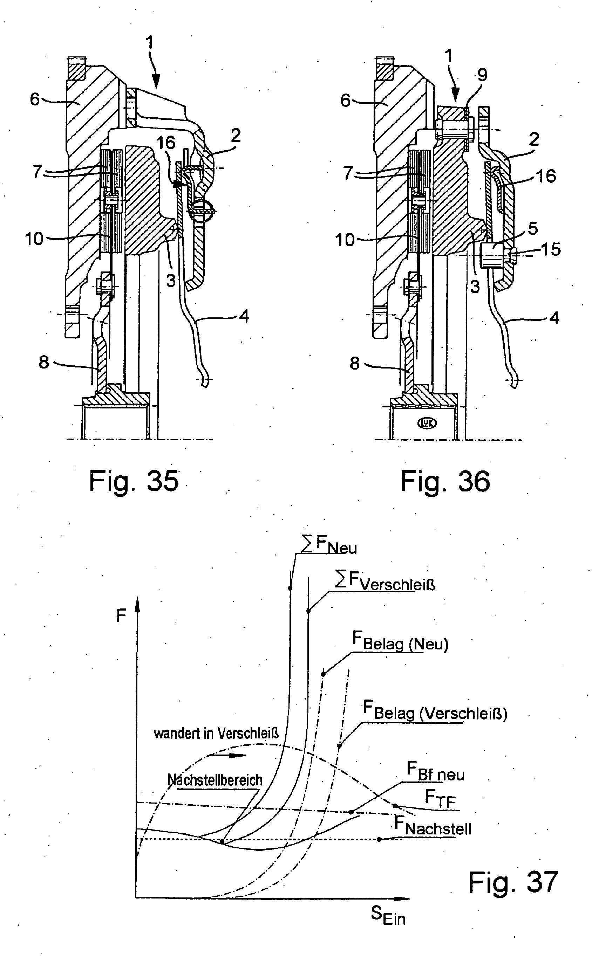

Die in den Figuren 35 und 36 dargestellte Reibungskupplung funktioniert ähnlich wie die in den Figuren 32 und 33 dargestellte Reibungskupplung. Allerdings ist bei der in den Figuren 35 bis 36 dargestellten Reibungskupplung die Federkennlinie der zusätzlichen Tellerfeder (63 in den Figuren 32 und 33) in den Einrückhebel beziehungsweise die Anpresstellerfeder 4 integriert. Durch das Wegfallen der zusätzlichen Tellerfeder wirkt die Abstützkraft der Anpresstellerfeder 4 direkt auf den Nachstellmechanismus 16. Deshalb muss die Anpressplatte 3 über eine degressive Blattfeder 9 mit dem Kupplungsdeckel 2 gekoppelt sein, damit so die Kraft auf den Nachstellmechanismus 16 abgebaut werden kann. Das zugehörige Kraft-Weg-Diagramm ist in Figur 37 dargestellt.

Bei der in den Figuren 38 bis 41 dargestellten Reibungskupplung ist die Anpressplatte 3 über Standard-Blattfedem 9 mit dem Kupplungsdeckel 2 verbunden. An dem Kupplungsdeckel 2 ist ein Nachstellmechanismus 16 befestigt, der einen Rampenring mit Schraubenfedern umfasst, die den Rampenring verdrehen können. Der Nachstellmechanismus 16 bildet den äußeren Auflagepunkt für den Einrückhebel beziehungsweise die Anpresstellerfeder 4. Darüber hinaus ist der Einrückhebel 4 an aus dem Kupplungsdeckel 2 herausgebogenen Zungen 65 abgestützt, die gleichzeitig dazu dienen, die Anpresstellerfeder 4 zu zentrieren. Ein Teil der Zungen 65 ist so geformt, dass der Einrückhebel 4 bei geschlossener Kupplung an diesen zur Anlage kommt. Knapp oberhalb des (nicht dargestellten) Einrücklagers ist an dem Kupplungsdeckel 2 ein Deckelanschlag 61 ausgebildet, der den Einrückhebel 4 abstützt. Dadurch wird unter anderem ein Nachstellen der Kupplung, zum Beispiel in der Transportlage, verhindert.

Beim Einrücken der in den Figuren 38 bis 41 dargestellten Reibungskupplung schwenkt der Einrückhebel 4 in Richtung der Kupplungsscheibe 8. Die Abstützkraft auf den Nachstellmechanismus 16 ist immer so groß, dass dieser nicht nachstellen kann. Am Ende des Schwenkwegs trifft der Einrückhebel 4 auf die Deckelzungen 65. Wenn an der Kupplungsscheibe 8 beziehungsweise den Reibbelägen 7 Verschleiß auftritt, dann schwenkt der Einrückhebel etwas weiter, was zu einer plastischen Verformung der Deckelzunge 65 führt. Wenn die Reibungskupplung wieder geöffnet wird, dann drücken die Blattfedem 9 den Einrückhebel 4 gegen den Deckelanschlag 61 und gegen die andere Seite der nun nach unten gebogenen Zunge 65. Dadurch entsteht ein Spiel 67 zwischen dem Nachstellmechanismus 16 und dem Einrückhebel 4. Das Spiel 67 wird dann durch den Nachstellmechanismus 16 ausgeglichen. Die Anpressplatte 3 rückt um den Betrag des aufgetretenen Verschleißes dichter an die Kupplungsscheibe 8 beziehungsweise die Reibbeläge 7 heran. Wenn der Deckelanschlag 61 nahe beim Einrückdurchmesser liegt, ändert sich die Einrückhebelposition kaum und der Einrückweg bleibt annähernd konstant.

Alternativ kann die in den Figuren 38 bis 41 dargestellte Reibungskupplung auch mit einem Nachstellmechanismus 16 ausgestattet sein, der zwei Rampenringe umfasst. Die beiden Rampenringe sind vorteilhaft so angeordnet, dass sie sich jeweils nur um einen voreingestellten Betrag nacheinander gegeneinander verdrehen können. Der Nachstellmechanismus mit den beiden Rampenringen ist vorzugsweise am Kupplungsdeckel befestigt und bildet den äußeren Auflagepunkt für den Einrückhebel. Vorzugsweise sind die beiden Rampenringe radial versetzt angeordnet. Der innere Rampenring wird vorteilhaft mit Blattfedem gegen den Kupplungsdeckel verspannt. An diesen Blattfedern kann ein Bolzen angebracht sein, an dem der Einrückhebel jeweils im eingerückten und im ausgerückten Zustand ansteht. Ein Deckelanschlag stützt den Einrückhebel knapp oberhalb des Einrücklagers ab. Damit wird unter anderem ein Nachstellen der Kupplung in Transportlage verhindert. Beim Einrücken der Kupplung schwenkt der Einrückhebel in Richtung der Kupplungsscheibe. Der Nachstellmechanismus wird durch Zusatzblattfedem verspannt. Am Ende des Schwenkwegs trifft der Einrückhebel auf das untere Ende des Bolzens. Tritt nun an der Kupplungsscheibe beziehungsweise den Reibbelägen Verschleiß auf, dann schwenkt der Einrückhebel etwas weiter und zieht an dem Bolzen, der wiederum an der Blattfeder zieht, die den Nachstellmechanismus verspannt. Dadurch wird der innere Rampenring frei und kann einen definierten Weg nachstellen. Wenn die Kupplung wieder geöffnet wird, dann drücken die Blattfedern den Einrückhebel gegen den Deckelanschlag und gegen die andere Seite des Bolzens. Dadurch entsteht zwischen dem äußeren Rampenring des Nachstellmechanismus und dem Einrückhebel ein Spiel, das von dem äußeren Rampenring ausgeglichen wird. Jetzt erst kann der innere Rampenring bei Verschleiß erneut verstellt werden. Die Anpressplatte rückt um den Betrag des aufgetretenen Verschleißes dicht an die Kupplungsscheibe heran. Wenn der Deckelanschlag nahe beim Einrückdurchmesser liegt, ändert sich die Position des Einrückhebels kaum und der Einrückweg bleibt annähernd konstant.

Der Nachstellmechanismus am Kupplungsdeckel kann so gestattet sein, dass in den Kupplungsdeckel Rampen geprägt werden, auf die ein Rampenring aufgesetzt wird. Dieser Rampenring kann durch Druckfedern verdreht werden. Alternativ kann auf den Rampenring verzichtet und die Gegenrampen zu den Deckelrampen aus der Hebelfeder geformt werden. Die Verdrehung der Rampen gegeneinander erfolgt ebenfalls durch Druckfedern, die in diesem Fall die ganze Hebelfeder verdrehen.

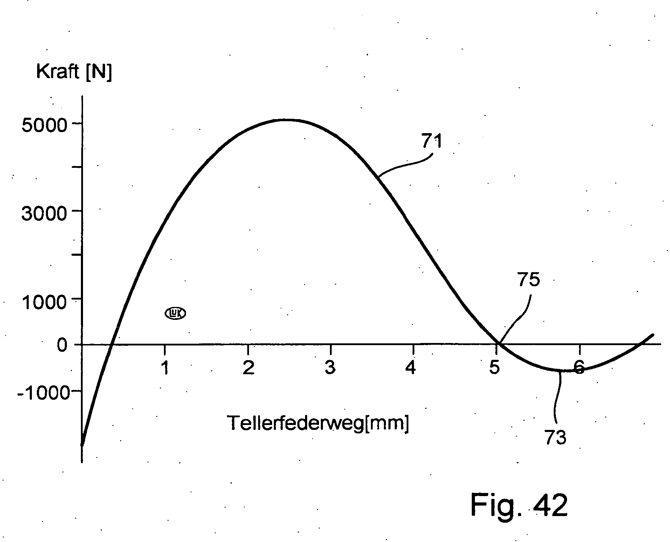

Die in den Figuren 42 bis 46 dargestellten Ausführungsformen betreffen Kupplungssysteme; die eine Reibungskupplung, eine Betätigungsstrecke und einen Aktor umfassen. Die dargestellten Kupplungssysteme umfassen vorzugsweise automatisierte Kupplungen, und zwar sowohl Einfach- als auch Doppelkupplungen. Dabei kommen vorzugsweise Kupplungen mit Verschleißnachstellung zum Einsatz, bei denen der Verschleiß zum Beispiel mit Hilfe eines Kraftsensors detektiert wird. Vorzugsweise ist die Haupttellerfeder so ausgelegt, dass sie als sogenannte "Schnapptellerfeder" funktioniert.

In Figur 42 ist in einem Kraft-Weg-Diagramm die Kraft der Anpresstellerfeder über den Tellerfederweg aufgetragen. In dem Diagramm ist eine Tellerfederkennlinie 71 dargestellt, die ein Minimum beziehungsweise einen Talpunkt 73 aufweist, in dem die von der Tellerfeder aufgebrachte Kraft negativ ist, also nicht in Einrückrichtung der entsprechenden Reibungskupplung, sondern in Ausrückrichtung wirkt. Dies bedeutet, dass bei Überschreitung eines Nulldurchgangspunktes 75 während der Ausrückphase die Reibungskupplung selbsttätig offen bleibt.

Das Tellerfederminimum 73 soll deutlich tiefer sein als bei derzeitigen Tellerfedern, auch negativ: Gleichzeitig soll die zugehörige Kupplung, im Gegensatz zu der herkömmlichen Kupplungsauslegung, in der Anpresskraft so reduziert werden, dass die Übertragungssicherheit bei eingerückter Kupplung zwischen 0,5 und 1 liegen soll. Damit bei dieser Kupplungsauslegung die Kupplung bei Volllastbetrieb und dem damit verbundenen hohen Motordrehmoment nicht durchrutscht, soll die Kupplung mittels eines Aktors über das Ausrücksystem über-die Tellerfederzungen zugezogen werden.

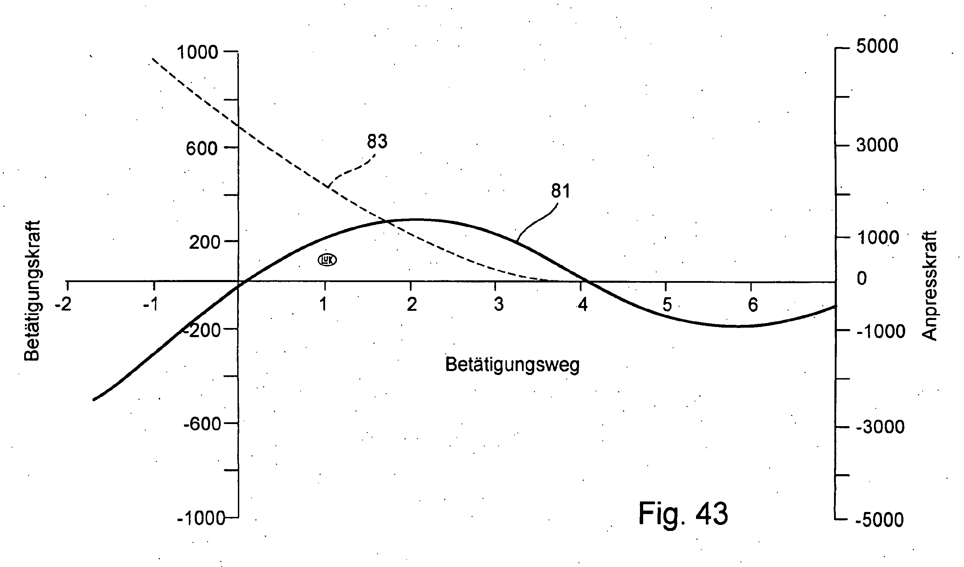

Der Hauptvorteil einer solchen Anordnung liegt darin, dass ohne zusätzliche Bauteile beziehungsweise Federelemente an den Tellerfederzungen eine minimale Betätigungskraft anliegt, die um die Nulllage pendelt und, wie in Figur 43 dargestellt ist, über den Betätigungsweg in gewissen Bereichen negativ und positiv sein kann.

In Figur 43 ist die Betätigungskraft mit 81 und die Anpresskraft mit 83 bezeichnet. Die Betätigungskräfte liegen, für ein solches System im Bereich von minus 500 N bis plus 500 N. Ein weiterer Vorteil für dieses System liegt auch darin, dass, bedingt durch die geringen Betätigungskräfte an den Tellerfederzungen, die Verluste aufgrund von Reibung und Durchbiegungen im nachgeschalteten Betätigungssystem besonders gering sind. Besonders vorteilhaft ist diese Art der Kupplungsgestaltung in Verbindung mit einer selbsteinstellenden Kupplung mit Kraftsensor, da für die axiale, motorseitige Abstützkraft der Haupttellerfeder gegen den Kupplungsdeckel die Tangentialblattfedern an der Anpressplatte ausreichen. Das bedeutet, dass eine zusätzliche Sensortellerfeder entfallen kann. Es kann jedoch von Vorteil sein, die Kennlinie der Tangentialblattfedern linear oder degressiv zu gestalten und mittels Sensorzungen aus der Haupttellerfeder eine zusätzliche axiale Kraft auf die Haupttellerfeder zu erzeugen. Diese axiale Kraft der Sensorzunge kann sowohl ziehend als auch drückend sein.

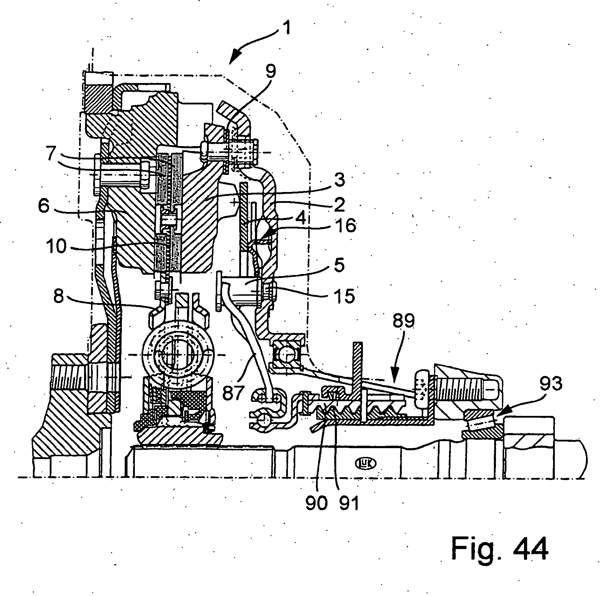

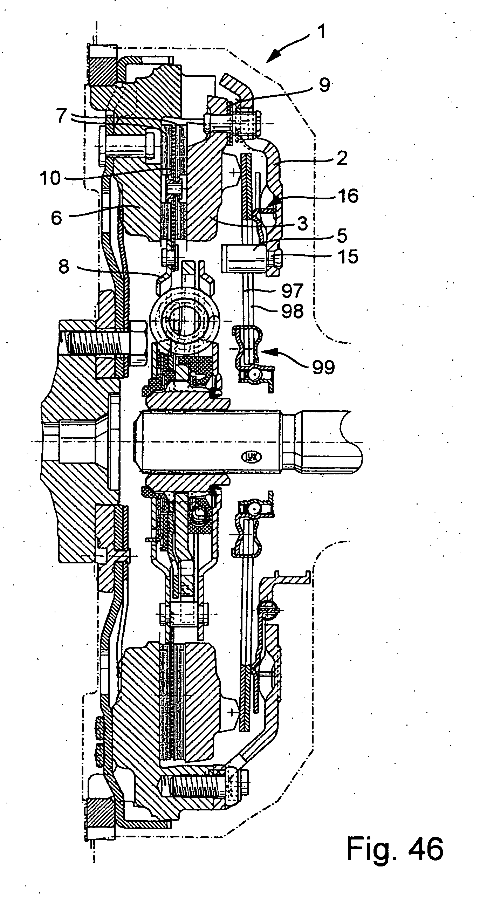

Die in den Figuren 44 und 46 dargestellten Ausführungsformen betreffen ähnliche Reibungskupplungen wie die in den Figuren 1 bis 3 dargestellte Ausführungsform. Gleiche Teile sind mit gleichen Bezugszeichen versehen, so dass insofern auf die Beschreibung zu den Figuren 1 bis 3 verwiesen wird. Im Folgenden wird nur auf die Unterschiede zwischen den einzelnen Ausführungen eingegangen.

Bei der in Figur 44 dargestellten Ausführungsform ist eine der vorab beschriebenen Sensorzungen mit 87 bezeichnet. Über die axiale Abstützkraft der Haupttellerfeder 4 mittels Blattfederkraft und Sensorzungen 87 kann die axiale Verlagerung der Tellerfeder 4 über den Verschleiß auch derart gesteuert werden, dass die Sensorzungen 87 über den Belagverschleiß nahezu an der gleichen Position stehen bleiben. Hierzu muss die resultierende Sensorkraft über dem Verschleißweg ansteigen, so dass sich der Betriebspunkt der Kupplung ungefähr im Verhältnis 4:1 ändert. Das heißt, dass sich der Betriebspunkt bei 2 mm Belagverschleiß ungefähr um 0,5 mm in Richtung Tellerfeder-Maximum verschiebt.

Zum Betätigen der in Figur 44 dargestellten Kupplung ist ein mechanisches Betätigungssystem 89 vorteilhaft, dessen Betätigung über Gewinde 90, 91 oder (nicht dargestellte) Rampen betätigt wird. Über die dargestellten Schraubengewinde 90, 91 kann eine gegebenenfalls erforderliche Systemselbsthemmung realisiert werden. Das in Figur 44 dargestellte Betätigungssystem 89 kann zum Beispiel über ein Zahnsegment direkt oder indirekt über einen Elektromotor mit Zahnritzel angetrieben werden. Es können aber auch andere Betätigungsaktoren zum Einsatz kommen. Vorteilhaft ist auch, wenn das Betätigungssystem, wie in Figur 44 gezeigt ist, über ein Lager 93 kupplungsfest angeordnet wird. Das liefert den Vorteil, dass die im Betrieb auftretenden Axialschwingungen des Motors nicht zu einer Modulation des Kupplungsdrehmoments führen.

Zur Vermeidung eines unstetigen Kupplungsmomentenaufbaus ist es vorteilhaft, wenn der zweite Betätigungskraft-Nulldurchgang (siehe Figur 43) in Richtung öffnende Kupplung erst dann auftritt, wenn das Kupplungsmoment weniger als 5 N beträgt. Darüber hinaus ist es erforderlich, dass das Ausrücklager möglichst spielfrei axial mit den Tellerfederzungen fixiert wird.

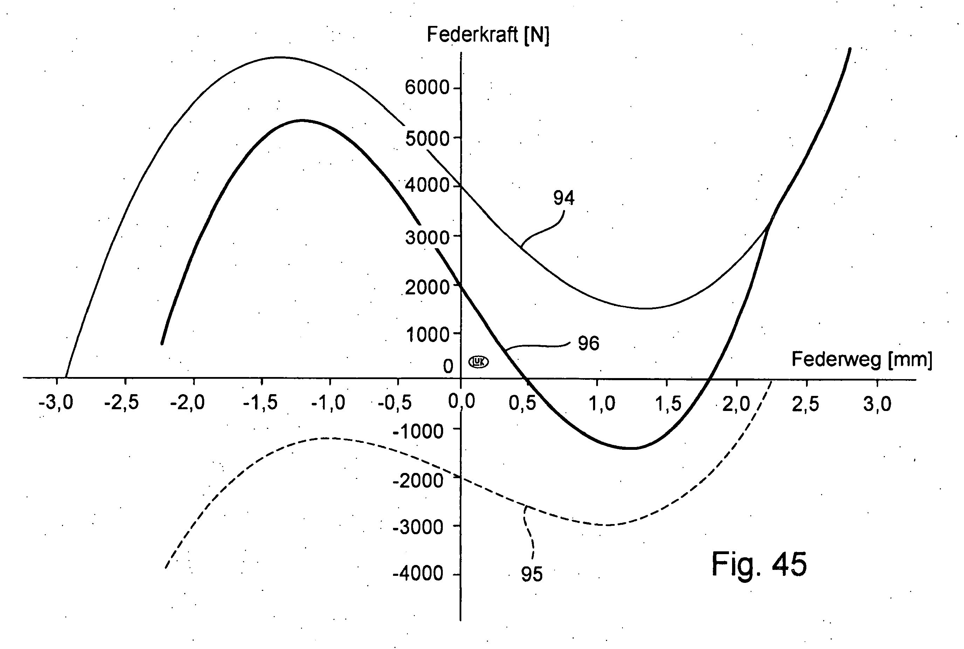

Die Erzeugung einer Tellerfeder mit einem tiefen Kraftminimum auch kleiner Null, also einer sogenannten Schnappfeder, kann einerseits über eine speziell gestaltete Einfachfeder erfolgen oder auch über zwei gegeneinander gestellte Tellerfedern mit nicht schnappender Charakteristik, wie das Kraft-Weg-Diagramm in Figur 45 zeigt. In Figur 45 ist eine erste Tellerfederkennlinie 94, die komplett im positivem Federkraftbereich verläuft, und eine zweite Tellerfederkennlinie 95 dargestellt, die komplett im negativen Federkraftbereich verläuft. Die aus den beiden Tellerfederkennlinien 94 und 95 resultierende Tellerfederkennlinie 96 weist eine schnappende Charakteristik auf.

Die in Figur 46 dargestellte Reibungskupplung umfasst eine zweiteilige Anpresstellerfedereinrichtung, die eine erste Anpresstellerfeder 97 und eine zweite Anpresstellerfeder 98 umfasst. Die beiden Anpresstellerfedem 97 und 98 sind an ihrem Innendurchmesser axial miteinander verriegelt, wie bei 99 gezeigt ist.

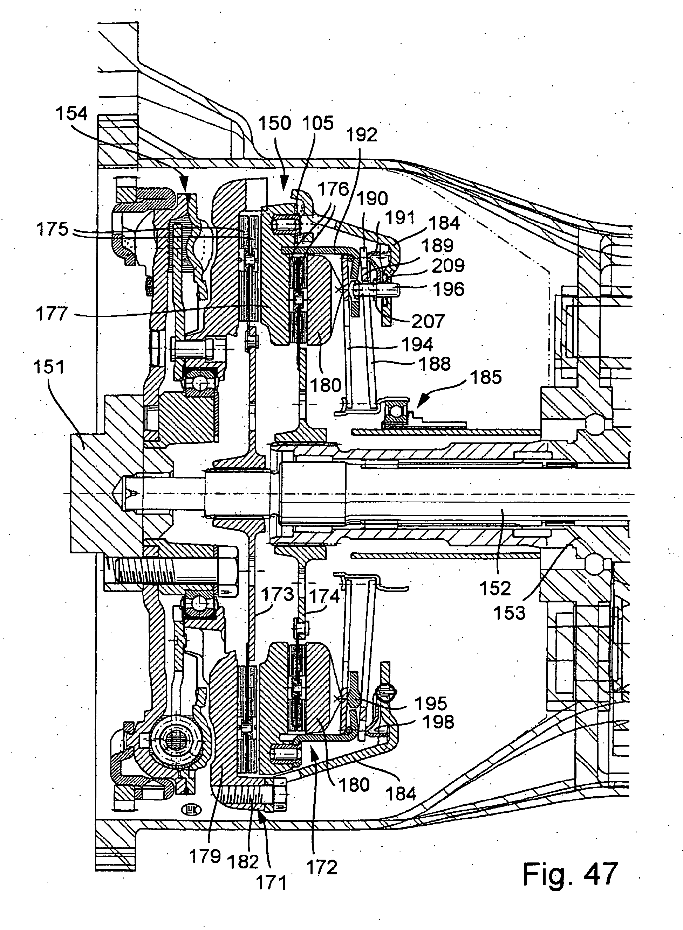

In den Figuren 47 bis 50 ist ein Kupplungsaggregat dargestellt, das eine Kupplungseinheit mit einer Doppelkupplung 150 umfasst. Die Doppelkupplung 150 dient dazu, eine treibende Welle 151, wie insbesondere die Kurbelwelle einer Brennkraftmaschine, mit zwei antreibbaren Wellen 152, 153, insbesondere Getriebeeingangswellen, zu verbinden und zu trennen. Die Doppelkupplung 150 ist über einen Schwingungsdämpfer 154 mit dem Motor verbunden. Die von der Kurbelwelle 151 hier in den Dämpfer eingeleiteten Torsionsschwingungen werden dadurch zumindest im Wesentlichen gefiltert, so dass diese zumindest nicht voll auf die Doppelkupplung 150 beziehungsweise auf die Getriebewellen 152, 153 übertragen werden.

Die Doppelkupplung 150 umfasst zwei Reibungskupplungen 171, 172, die jeweils eine Kupplungsscheibe 173, 174 umfassen. Die Kupplungsscheibe 173 ist auf der inneren Welle 152 und die Kupplungsscheibe 174 auf der hohlen äußeren, koaxial verlaufenden Welle 153 aufgenommen. Radial außen besitzen die Kupplungsscheiben 173, 174 Reibbereiche, welche bei dem dargestellten Ausführungsbeispiel durch ringförmige Reibbeläge 175, 176 gebildet sind.

Zwischen den Reibbelägen 175 der Reibungskupplung 171 und den Reibbelägen 175 der Reibungskupplung 172 ist eine Zwischenplatte 177 angeordnet. Die Zwischenplatte 177 ist axial zu einer Gegendruckplatte 179 verlagerbar, die über den Dämpfer 154 mit der Kurbelwelle 151 gekoppelt ist. Die Reibungskupplung 171 ist in Figur 47 im geöffneten Zustand dargestellt. Das heißt, die Reibbeläge 175 der Reibungskupplung 171 sind nicht zwischen der Zwischendruckplatte 177 und der Gegendruckplatte 179 eingeklemmt. Die Zwischendruckplatte 177 bildet gleichzeitig die Gegendruckplatte für eine Druckplatte 180 der Reibungskupplung 172. Zwischen der Druckplatte 180 und der Zwischendruckplatte 177 sind die Reibbeläge 176 der Reibungskupplung 172 eingeklemmt. Das heißt, die Reibungskupplung 172 befindet sich im geschlossenen Zustand.

An der Gegendruckplatte 179 ist mit Hilfe von Schrauben 182 ein Kupplungsdeckel 184 befestigt, der auch als Kupplungsgehäuse bezeichnet wird. Radial innerhalb des Kupplungsgehäuses 184 ist ein Ausrückmechanismus 185 angeordnet, über welchen die beiden Reibungskupplungen 171, 172 selektiv betätigbar sind. Die Betätigung der Reibungskupplung 171 beziehungsweise die axiale Verlagerung der Zwischendruckplatte 177 erfolgt über ein Betätigungsmittel 188, welches als membranartiges beziehungsweise tellerfederartiges Hebelelement 188 ausgestaltet ist und auch als Hebelfeder oder Hebelelement bezeichnet wird. Das Hebelelement 188 besitzt einen ringförmigen Bereich 189, von dem radial nach außen gerichtete Zungen 190 ausgehen. Über die Zungen 190 stützt sich das Hebelelement 188 an einer ringförmigen Schwenklagerung 191 ab, welche sich ihrerseits am Kupplungsgehäuse 184 axial abstützt. Mit seiner anderen Seite kann das Hebelelement 188 ein bei dem dargestellten Ausführungsbeispiel topfförmig ausgebildetes Zwischenbauteil 192 beaufschlagen, das auch als Zwischendeckel bezeichnet wird. Der Zwischendeckel 192 steht in Wirkverbindung mit der Zwischenplatte 177, und zwar derart, dass durch Verschwenken des Hebelelements 188 die Zwischenplatte 177 axial verlagert wird, wodurch die Reibungskupplung 171 geöffnet und geschlossen werden kann.

Die Reibungskupplung 172 ist ebenfalls über ein Betätigungsmittel 194 betätigbar, welches bei dem dargestellten Ausführungsbeispiel ebenfalls durch ein Hebelelement 194 gebildet ist, das auch als Hebelfeder bezeichnet wird. Das Hebelelement 194 ist bezüglich der Ausgestaltung und der Funktion vergleichbar mit dem Hebelelement 188. Das Hebelelement 194 stützt sich radial außen ebenfalls an einer ringartigen Schwenklagerung 195 ab und beaufschlagt mit seiner anderen Seite die Druckscheibe oder Druckplatte 180, so dass diese durch Verschwenkung des Hebelelements 194 axial verlagerbar ist. Die Schwenklagerung 195 stützt sich über einen Stift 196 am Kupplungsgehäuse 184 ab.

Bei dem in den Figuren 47 bis 50 dargestellten Ausführungsbeispiel sind die beiden Reibungskupplungen 171, 172 derart ausgestaltet, dass sie über die Betätigungsmittel 188, 194 zwangsweise geschlossen werden. Die für das Schließen der Reibungskupplungen 171, 172 erforderlichen Axialkräfte werden somit über den Betätigungsmechanismus 185 aufgebracht.

Die motorseitige Kupplung 171 wird auch als Lastschaltkupplung bezeichnet. Die getriebeseitige Kupplung 172 wird auch als Anfahrkupplung bezeichnet. Die Lastschaltkupplung 171 ist mit einer Verschleißnachstelleinrichtung 198 ausgestattet. Bei der Anfahrkupplung 172 ist eine Verschleißnachstellung nicht erforderlich.

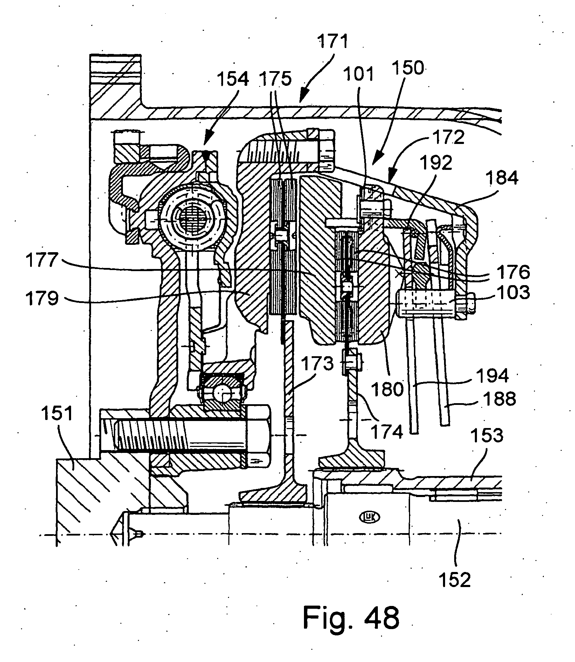

In Figur 48 sieht man, dass die Druckplatte 180 mit Hilfe von Blattfedern 101 mit dem Kupplungsgehäuse 184 gekoppelt ist. Darüber hinaus sieht man in der Schnittansicht der Figur 48, dass an dem Kupplungsgehäuse 184 Zentrierbolzen 103 befestigt sind, die zur Zentrierung der Tellerfedern 188 und 194 dienen.

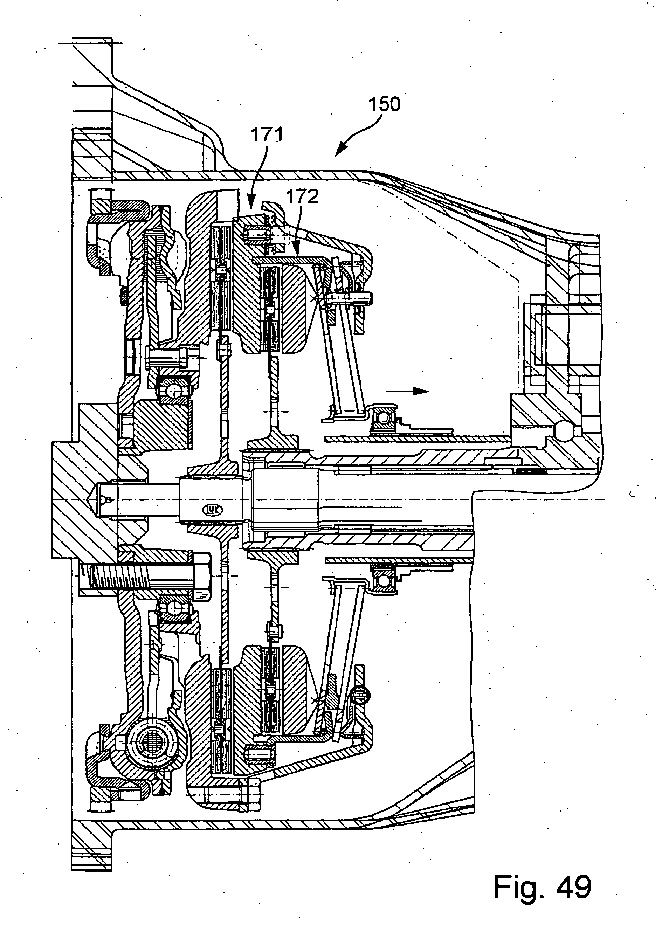

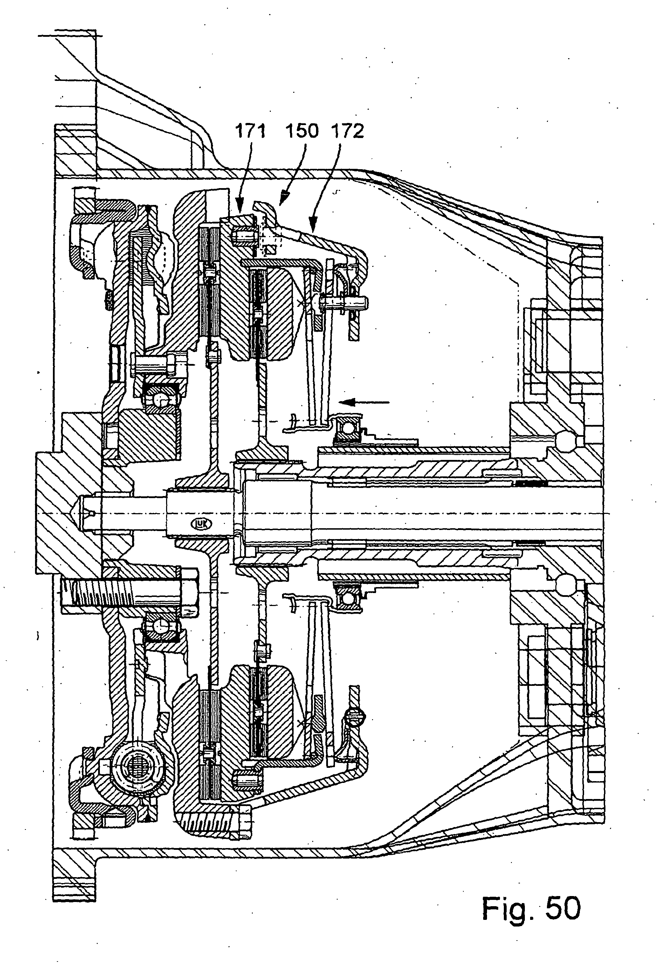

In den Figuren 47 und 48 ist die Anfahrkupplung 172 geschlossen und die Lastschaltkupplung 171 geöffnet. Die Doppelkupplung 150 befindet sich also im Fahrzustand. In Figur 49 sind sowohl die Anfahrkupplung 172 als auch die Lastschaltkupplung 171 geöffnet. In diesem Zustand kann angefahren werden. In Figur 50 ist die Anfahrkupplung 172 geschlossen und die Lastschaltkupplung 171 schließt ebenfalls. Das entspricht dem Zustand beim Hochschalten.

Die in den Figuren 47 bis 50 in verschiedenen Schaltstellungen dargestellte Doppelkupplung 150 funktioniert wie folgt: In der Grundstellung, das heißt, wenn keine Betätigungskraft aufgebracht wird, ist die Anfahrkupplung 172 geschlossen. Die Tellerfeder 194 presst die Anpressplatte 180 gegen die Reibbeläge 176 der Kupplungsscheibe 174 und stützt sich an der Zwischenplatte 177 ab. Die Zungenposition der Tellerfeder 194 bestimmt die Lage des Ausrückers 185. Die Hebelfeder oder Tellerfeder 188 ist mit geringer Kraftsteigung leicht vorgespannt und stützt sich außen an dem Zwischendeckel 192 ab. Die Schwenklagerung 195 wird von einem Zwischenring 195 gebildet, der zwischen den beiden Tellerfedern 188 und 194 leicht eingeklemmt ist. Die komplette Anfahrkupplung 172 mit dem Zwischenschwungrad 177 wird durch Blattfedem 205 nach rechts gegen die Verstelleinrichtung 198 vorgespannt, die einen Verstellring umfasst. Der Verstellring ist zusätzlich durch einen Anschlag 207 an dem Stift 196 eingeklemmt und am Nachstellen gehindert.

Wenn das Ausrücksystem 185 zieht, sich also nach rechts bewegt, wird die Anfahrkupplung 172 aufgezogen und die Anpressplatte 180 geöffnet. Wegen des Zwischenrings 195 macht die Hebelfeder 188 diese Bewegung mit. Die Zugkraft stützt sich über den Verstellring 198 am Deckel 184 ab.

Wenn das Ausrücksystem 185 drückt, das heißt, sich ausgehend von der in Figur 47 dargestellten Position nach links bewegt, wird die gesamte, bereits geschlossene Anfahrkupplung 172 über den Zwischenring 195 und die Reibbeläge 176 der Kupplungsscheibe 174 ebenfalls nach links in Richtung der Reibbeläge 175 der Kupplungsscheibe 173 der Lastschaltkupplung 171 gedrückt, um dieselbe zu schließen. Die Lastschaltkupplung 171 ist eine zugedrückte Kupplung mit Verschleißnachstellung. Die Tellerfeder 194 der Anfahrkupplung 172 ändert dabei ihre Winkellage nicht, das heißt, sie wird nur parallel verschoben.

Wenn an der Anfahrkupplung 172 Verschleiß auftritt, erfolgt keine Nachstellung. Die Zungenposition der Tellerfeder 194 rückt um einen gewissen Betrag, der sich aus der Multiplikation des Verschleißes mit der entsprechenden Übersetzung ergibt, nach links.

Wenn an der Lastschaltkupplung 171 Verschleiß auftritt, muss die Hebelfeder 188 weiter eingerückt werden, um an der Lastschaltkupplung 171 die gleiche Anpresskraft zu erzielen. Dabei wird der Stift 196, der mit Axialfreilauf in einer entsprechenden Axialfreilaufbohrung 209 in dem Kupplungsgehäuse 184 axial verlagerbar ist, um den Verschleißbetrag herausgezogen. Der Verstellring 198 kann, sobald er nicht mehr durch die Blattfederkraft über den Zwischendeckel eingeklemmt ist, nachstellen. Diese Aufhebung der Blattfederkraft findet statt, wenn die vorgespannte Hebelfeder ein Stück weit gedrückt wird, das heißt, wenn die Abstützkraft am Deckel nahe Null ist. Die Verlagerung des gesamten Pakets entspricht dem Betrag des Verschleißes.

Das in den Figuren 47 bis 50 dargestellte Kupplungsaggregat liefert den Vorteil, dass für die Doppelkupplung 150 nur eine geringe Gesamtmasse und eine geringe axiale Höhe benötigt wird. Die große Kupplungsscheibe 173 der Lastschaltkupplung 171 verträgt eine deutlich höhere Belastung als die Anfahrkupplung 172. Darüber hinaus wird für die Doppelkupplung 150 nur ein Betätigungssystem benötigt. Die einfache und, bezogen auf Doppelkupplungen, auch relativ kostengünstige Konstruktion ist auch einfach montierbar.

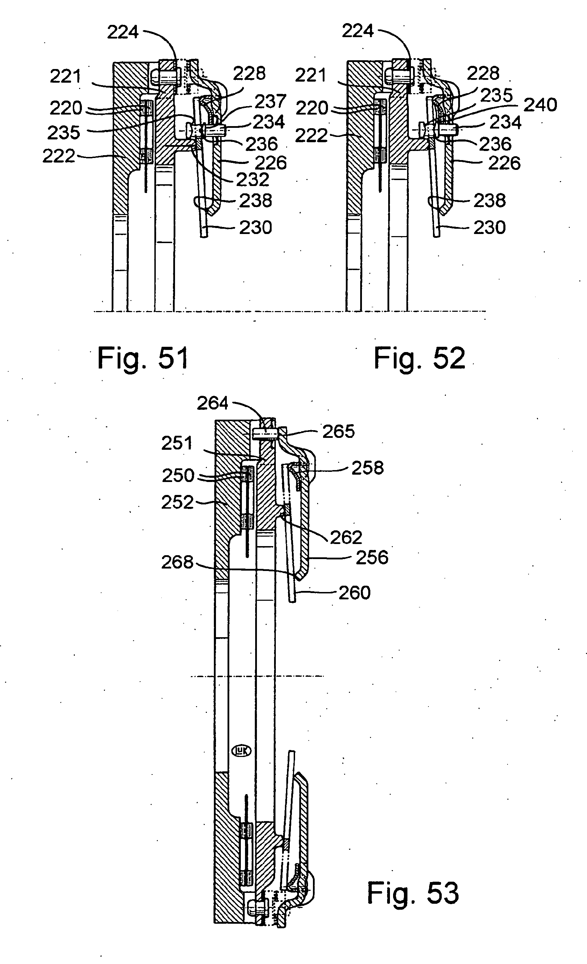

In Figur 51 ist ein Ausschnitt einer Reibungskupplung im Schnitt dargestellt. Reibbeläge 220 einer Kupplungsscheibe sind zwischen einer Druckplatte 221 und einer Gegendruckplatte 222 angeordnet. Die Druckplatte 221 ist mit Hilfe von Blattfedern 224 in bekannter Art und Weise mit einem Kupplungsdeckel 226 gekoppelt. An dem Kupplungsdeckel 226 ist ein Verstellringrampensystem 228 angebracht. An dem Verstellringrampensystem 228 liegt eine Tellerfeder 230 mit ihrem radial äußeren Bereich an. Radial weiter innen liegt die Tellerfeder an einem Vorsprung 232 an, der an der Druckplatte 221 ausgebildet ist.

In einer Durchgangsbohrung des Kupplungsdeckels 226 ist ein Stift 234, zum Beispiel mit Hilfe eines Sperrelements, so aufgenommen, dass er axial nur in einer Richtung verschiebbar ist. An dem Stift 234 sind Anschlagflächen 235 und 236 für die Tellerfeder 230 vorgesehen. Darüber hinaus ist an dem Stift 234 eine Anschlagfläche 237 für das Verstellringrampensystem 228 vorgesehen. Schließlich ist an dem Innenradius des Kuppiungsdeckels 226 eine weitere Anschlagfläche 238 für die Tellerfeder 230 vorgesehen.

In Figur 52 ist bei 240 dargestellt, dass das Verstellringrampensystem 228, insbesondere der Verstellring, durch den Stift 234 blockiert wird.

In Figur 53 sind Reibbeläge 250 einer Kupplungsscheibe zwischen einer Druckplatte 251 und einer Gegendruckplatte 252 angeordnet. An einem Kupplungsdeckel 256 ist ein Verstellringrampensystem 258 angebracht, an dem eine Tellerfeder 260 anliegt. Außerdem liegt die Tellerfeder 260 an einem Vorsprung 262 an, der an der Druckplatte 251 ausgebildet ist. In der Druckplatte 251 ist radial außen ein Stift 264, zum Beispiel mit Hilfe eines Sperrelements, so aufgenommen, dass er sich axial nur in einer Richtung bewegen kann. Die der Gegendruckplatte 252 abgewandte Stirnfläche 265 des Stiftes 264 liegt an dem Kupplungsdeckel 256 an. Darüber hinaus ist an dem Innenradius des Kupplungsdeckels 256 eine Anschlagfläche 268 für die Tellerfeder 260 vorgesehen.

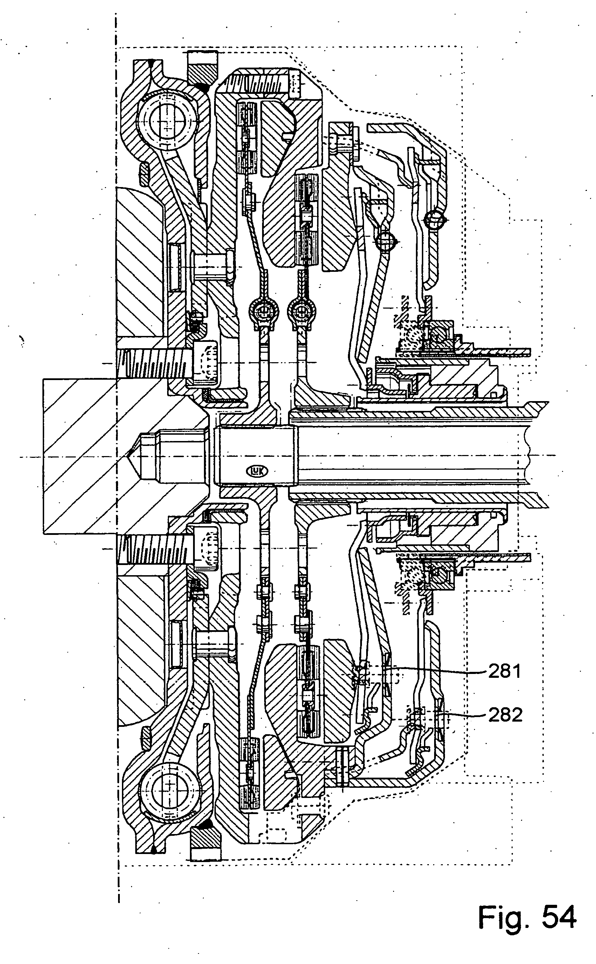

In Figur 54 ist ein Kupplungsaggregat mit einer Doppelkupplung dargestellt. Der Aufbau und die Funktionsweise eines derartigen Kupplungsaggregats ist in der deutschen Offenlegungsschrift DE 101 55 458 A1 beschrieben und wird hier als bekannt vorausgesetzt. Bei dem in Figur 54 dargestellten Kupplungsaggregat sind zusätzlich Stifte 281 und 282 vorgesehen, an denen Abstützflächen für die Tellerfedern vorgesehen sind. Die Anschlagflächen verhindern ein unerwünschtes Nachstellen der Kupplungen, hervorgerufen beispielsweise durch im Betrieb auftretende Schwingungen.

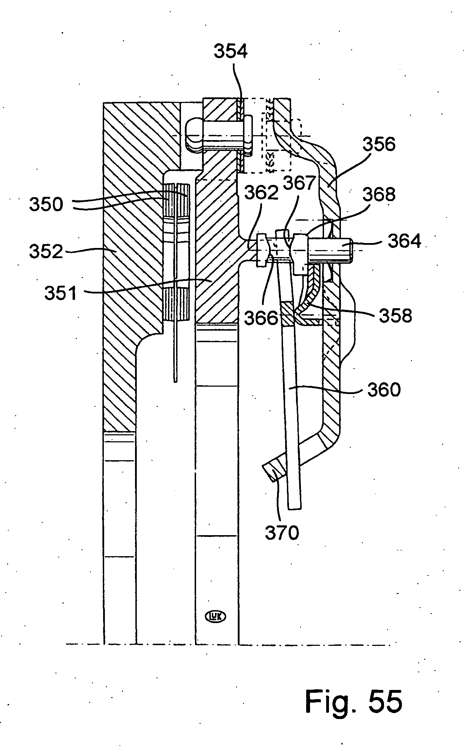

Bei der in Figur 55 dargestellten Reibungskupplung handelt es sich um eine sogenannte zugezogene Kupplung. Reibbeläge 350 sind zwischen einer Druckplatte 351 und einer Gegendruckplatte 352 angeordnet. Die Druckplatte 351 ist über Blattfedem 354 mit einem Kupplungsdeckel 356 verbunden, an dem ein Verstellringrampensystem 358 angebracht ist. An dem Verstellringrampensystem 358 liegt eine Tellerfeder 360 an. In einer Durchgangsbohrung des Kupplungsdeckels 356 ist, zum Beispiel mit Hilfe eines Sperrelements, ein Stift 364 in einer Richtung axial verschiebbar gelagert, der mit seinem Kopf an einem Vorsprung 362 anliegt, der an der Druckplatte 351 ausgebildet ist. An dem Stift 364 sind Anschlagflächen 366 und 367 für die Tellerfeder 360 vorgesehen. Darüber hinaus ist an dem Stift 364 eine Anschlagfläche 368 für das Verstellringrampensystem 358 vorgesehen. Schließlich ist an dem Kupplungsdeckel 356 noch eine Anschlagfläche 370 für die Tellerfeder 360 vorgesehen.

Die Stifte bei den in den Figuren 51 bis 55 dargestellten Ausführungsformen können an verschiedenen Durchmessern angebracht werden, jedoch bevorzugt im Bereich des Durchmessers, an dem der Vorsprung an der Druckplatte ausgebildet ist. Bei den in den Figuren 51, 52 und 55 dargestellten Ausführungsformen wird der Stift bei Verschleiß in Richtung der Anpressplatte bewegt. Demzufolge stützt sich die Tellerfeder beim Öffnen der Kupplung an dem Stift und dem Deckelanschlag ab, so dass das Verstellringrampensystem nachstellen kann. Bei den in den Figuren 52 und 55 dargestellten Ausführungsformen verhindert eine Rampe auf dem Verstellring, an dem sich der Stift abstützt, dass der Stift durch Schwingungen ungewollt nachstellt. Bei der in Figur 53 dargestellten Lösung wird der Stift bei Verschleiß in Richtung des Deckels bewegt. Demzufolge stützt sich der Stift beim Öffnen der Kupplung auf dem Deckel ab. Dadurch wird die Tellerfeder an der Anpressplatte und dem Deckelanschlag abgestützt, so dass der Verstellring freigegeben wird und nachstellen kann. Der Verstellweg des Verstellrings ist dabei größer als der Verschleiß.

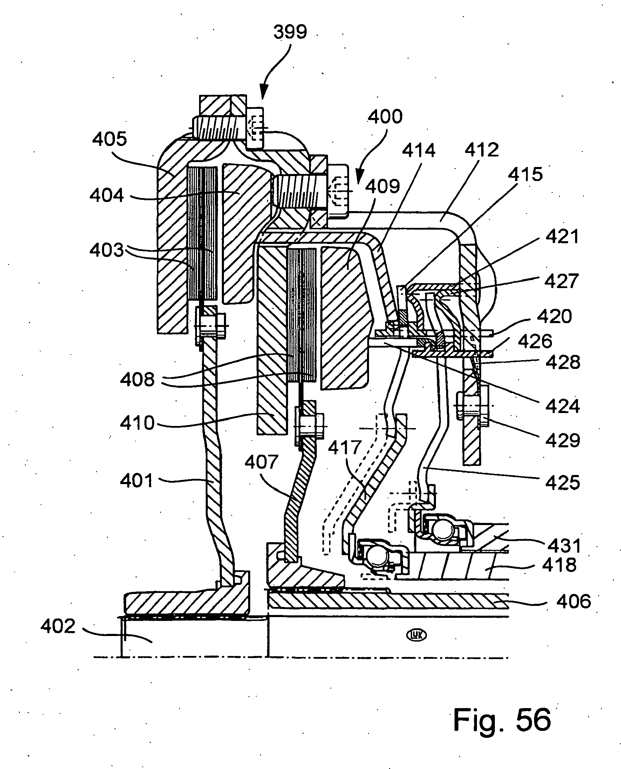

In Figur 56 ist ein Kupplungsaggregat mit einer zugedrückten Doppelkupplung und Verschleißnachstellung dargestellt. Die Doppelkupplung umfasst eine erste Kupplung 399 und eine zweite Kupplung 400. Die erste Kupplung 399 umfasst eine erste Kupplungsscheibe 401, die drehfest mit einer ersten Welle 402 verbunden ist. An der ersten Kupplungsscheibe 401 sind Reibbeläge 403 angebracht, die zur Drehmomentübertragung zwischen einer Druckplatte 404 und einer Gegendruckplatte 405 eingespannt werden können. Koaxial zu der ersten Welle 402 ist eine zweite Welle 406 angeordnet, die als Hohlwelle ausgebildet ist. Eine zweite Kupplungsscheibe 407 ist drehfest mit der zweiten Welle 406 verbunden. An der zweiten Kupplungsscheibe 407 sind Reibbeläge 408 angebracht, die zur Übertragung eines Drehmoments zwischen einer Druckplatte 409 und einer Gegendruckplatte 410 eingespannt werden können. Die Gegendruckplatte 410 ist fest mit der Gegendruckplatte 405 verbunden. Die Druckplatten 404 und 409 sind relativ zu den Gegendruckplatten 405 und 410 axial verlagerbar. Die Gegendruckplatten 405 und 410 sind darüber hinaus fest mit einem Kupplungsdeckel 412 verbunden, der auch als Kupplungsgehäuse bezeichnet wird.

An der Druckplatte 404 der ersten Kupplung 399 ist ein Stößelring 414 angebracht. An dem Stößelring 414 liegt eine Tellerfeder 415 an, die unter Zwischenschaltung eines Hebelelements 417 durch einen Betätigungsmechanismus 418 betätigbar ist. Die Tellerfeder 415 wirkt mit einem Anschlagring 420 zusammen und liegt mit ihrem radial äußeren Bereich an einem Verstellring 421 an, der zwischen der Tellerfeder 415 und dem Kupplungsdeckel 412 angeordnet ist.

An der Druckplatte 409 ist ein Nocken 424 angebracht, über den eine axiale Kraft von einer Tellerfeder 425 auf die Druckplatte 409 übertragen werden kann. Die Tellerfeder 425 wirkt mit einem Anschlagring 426 zusammen und liegt mit ihrem radial äußeren Bereich an einem Verstellring 427 an, der zwischen der Tellerfeder 425 und dem Kupplungsdeckel 412 angeordnet ist. Über eine Sperrfeder 428, die mit einem Niet 429 an dem Kupplungsdeckel 412 befestigt ist, wird sichergestellt, dass sich der Anschlagring 426 nur in einer axialen Richtung bewegen kann. Die Tellerfeder 425 wird über einen Betätigungsmechanismus 431 betätigt.

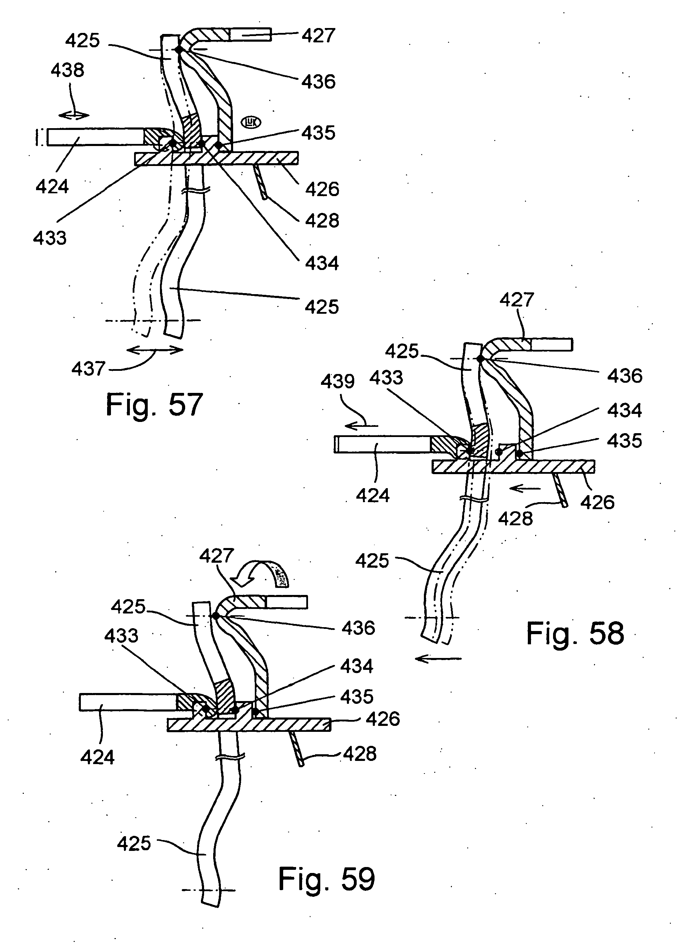

In den Figuren 57 bis 59 wird die Funktionsweise der Verschleißnachstellung am Beispiel der inneren, zweiten Kupplung 400 in Figur 56 erläutert. Die äußere, erste Kupplung 399 funktioniert in gleicher Weise. Beide Systeme lassen sich mit entsprechenden Durchgriffen durch die Fenster der Tellerfedern ineinander verschachteln und an einem gemeinsamen Kupplungsdeckel befestigen.

In Figur 57 ist das Zusammenwirken des mit der Druckplatte 409 gekoppelten Nockens. 424 mit der Tellerfeder 425, dem Anschlagring 426 und dem Verstellring 427 im Normalzustand gezeigt: Der Normalzustand herrscht, wenn seit der letzten Verstellung kein Verschleiß aufgetreten ist, oder der Verschleiß noch zu gering ist, um eine erneute Nachstellung auszulösen. Durch einen Doppelpfeil 437 ist angedeutet, dass die Tellerfeder 425 bei einer Betätigung der Kupplung innerhalb zweier Anschläge 433 und 434 verschwenkt, die an dem Anschlagring 426 ausgebildet sind. Dabei befindet sich die Tellerfeder 425 mit ihrem radial außen liegenden Bereich bei 436 in Anlage an dem Verstellring 427. Der Verstellring befindet sich außerdem in Anlage an einem dritten Anschlag 435, der an dem Anschlagring 426 ausgebildet ist. Dadurch wird ein Verstellen beziehungsweise Verdrehen des Verstellrings 427 im Normalzustand verhindert. Durch einen Doppelpfeil 438 ist die Bewegung des Nockens 424 beim Ein- beziehungsweise Ausrücken der Kupplung angedeutet.

In Figur 58 ist dargestellt, was passiert, wenn ein nennenswerter Verschleiß auftritt. Wenn, zum Beispiel an den Reibbelägen der Kupplungsscheibe Verschleiß auftritt, steigt der Einrückweg der Anpressplatte an, wie durch einen Pfeil 439 angedeutet ist. Das führt zu einem größeren Schwenkwinkel der Tellerfeder 425, die dadurch über den Anschlag 433 den Anschlagring 426 in axialer Richtung verschiebt. Das führt dazu, dass zwischen dem Anschlag 435 des Anschlagrings 426 und dem Verstellring 427 ein Spiel entsteht. Allerdings wird der Verstellring 427 noch durch die an ihm anliegende Tellerfeder 425 an der Kontaktstelle 436 am Nachstellen gehindert.

In Figur 59 ist dargestellt, dass die Tellerfeder 425 bei einem erneuten Öffnen der Kupplung früher auf den Anschlag 434 des Anschlagrings 426 trifft. Dabei wird ein Zurückrutschen des Anschlagrings 426 durch die Sperrfeder 428 verhindert. Die Eigensteifigkeit der Tellerfeder 425 führt zu einem Abheben von der Kontaktstelle 436. Dadurch wird der Verstellring 427 freigegeben und über zugehörige Druckfedem verdreht, wie durch einen Pfeil angedeutet ist. Das Verdrehen führt über ein zugehöriges Rampensystem dazu, dass der Verstellring 427 wieder an dem Anschlag 435 zur Anlage kommt. Ein einfacher Anschlag bei 435 ermöglicht ein paralleles Wandern der Tellerfeder 425 ohne eine Veränderung der Winkellage bei Verschleiß. Durch eine weitere Rampe bei dem Anschlag 435 wird ermöglicht, dass der Verstellring weiter nachstellt. Dies führt dann zu einem Abkippen der Tellerfeder während des Verschleißes, wodurch die Position des zugehörigen Ausrücklagers konstant gehalten werden kann. Durch eine definierte Endposition des Ausrücklagers oder entsprechende Anschläge am Kupplungsdeckel kann das exakte Abkippen der Tellerfeder und damit die Verschleißnachstellung zusätzlich unterstützt werden.

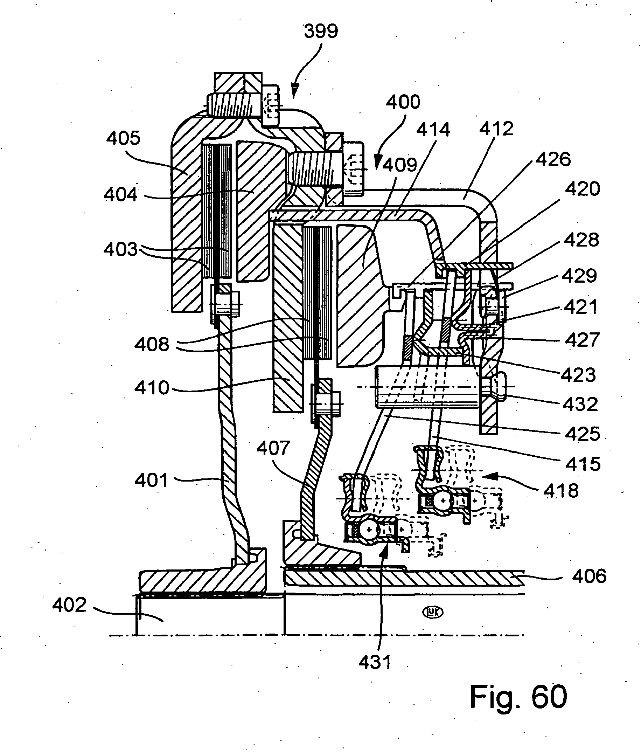

In Figur 60 ist ein Kupplungsaggregat für eine zugezogene Doppelkupplung dargestellt, das ähnlich aufgebaut ist wie das in Figur 56 dargestellte Kupplungsaggregat. Gleiche Teile sind mit gleichen Bezugszeichen versehen, so dass insofern auf die Beschreibung zu Figur 56 verwiesen wird. Im Folgenden wird nur auf die Unterschiede zwischen den beiden Kupplungsaggregaten eingegangen.

Die Verschleißnachstellung für zugezogene Kupplungen beruht auf dem gleichen Prinzip wie bei zugedrückten Kupplungen. Der Ansatz ist sowohl für Einfach- als auch für Doppelkupplungen möglich. Um bei Doppelkupplungen zwei Nachstellsysteme an einem Deckel befestigen zu können, ist für die innere Kupplung ein spezieller Nocken zwischen der Tellerfeder 425 und dem Verstellring 427 erforderlich. Der Nocken 423 ist an Bolzen 432 axial verschieblich gelagert und stützt sich über Durchgriffe durch die äußere Tellerfeder 415 an dem Verstellring 427 ab. Bei Verschleiß verdreht sich der Verstellring 427 und schiebt den Nocken 423 in Richtung Anpressplatte 409.

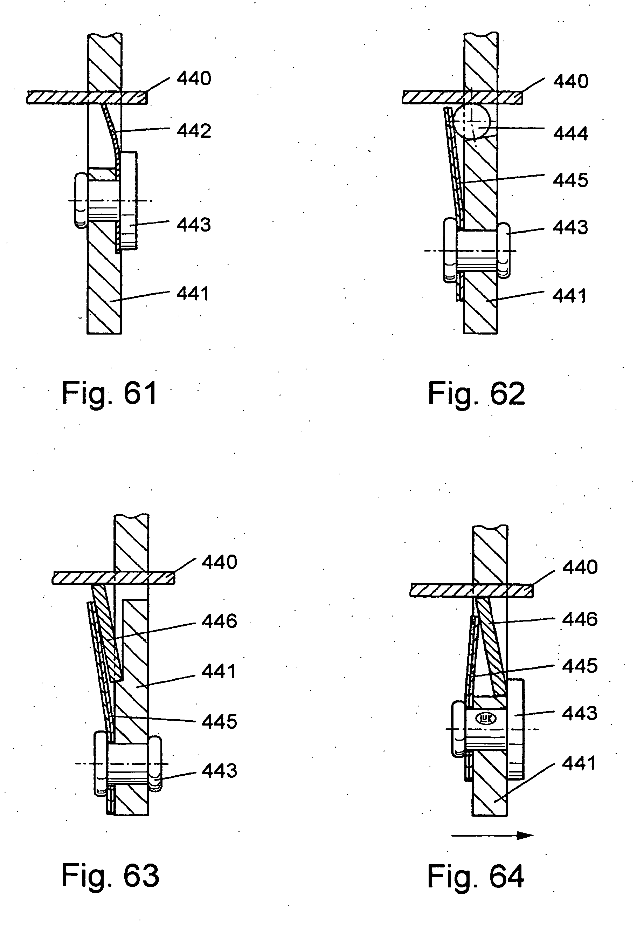

In Figur 61 ist ein reibschlüssiger Axialfreilauf für einen Anschlagring 440 dargestellt, der in einer Öffnung eines Kupplungsdeckels 441 in einer Richtung axial verschiebbar ist. Die Wirkung des Axialfreilaufs beruht auf einer vorgespannten Sperrfeder 442, die sich weiter aufstellt, wenn der Freilauf in Sperrrichtung belastet wird. Die Sperrfeder 442 ist mit Hilfe eines Niets 443 an dem Kupplungsdeckel 441 befestigt. Die Sperrfeder kann auch auf der anderen Seite des Kupplungsdeckels befestigt werden. Das setzt jedoch eine biegesteife Sperrfeder voraus, da die Sperrkraft außerhalb des Deckels eingeleitet wird.

In Figur 62 ist ein Axialfreilauf dargestellt, dessen Wirkung auf einer keilförmigen Aussparung im Kupplungsdeckel 441 beruht. In der keilförmigen Aussparung ist eine Rolle 444 aufgenommen, die durch Blattfedern 445 in die Aussparung gedrückt wird. Wenn sich der Anschlagring 440 in Sperrrichtung bewegt, verklemmt sich die durch die Blattfedern 445 vorgespannte Rolle 444 in der Aussparung. Dadurch wird der Anschlagring 480 blockiert. Die Rollen 444 können auch durch anders geformte Klemmkörper ersetzt werden. Durch eine entsprechende Riffelung der aneinander anliegenden Oberflächen von Anschlagring und Klemmkörper kann eine Verschleißnachstellung in definierten Stufen erreicht werden.

In den Figuren 63 und 64 sind Freiläufe dargestellt, bei denen die Funktionen Aufbringen der Vorlast und Übertragen der Sperrkräfte auf zwei Bauteile verteilt sind. Die Blattfedern 445 spannen eine Sperrscheibe 446 vor, welche die Sperrkräfte auf den Kupplungsdeckel 441 überträgt. Der Sperrscheibenfreilauf eignet sich somit für höhere Sperrkräfte. Durch große Aussparungen im Kupplungsdeckel lässt sich der Krafteinleitungspunkt auch in den Kupplungsdeckel 441 verlegen, wie in Figur 64 dargestellt ist.

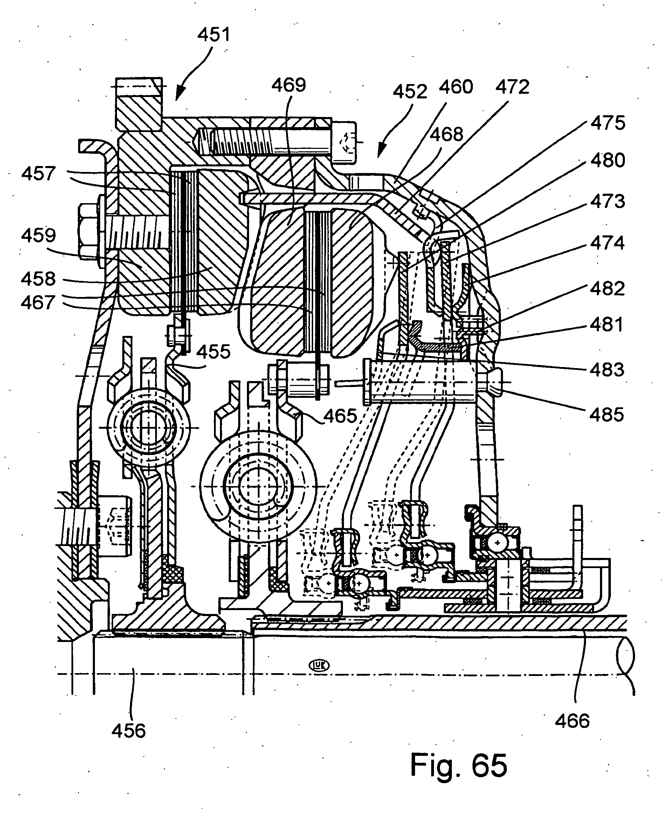

In Figur 65 ist ein Kupplungsaggregat mit einer aufgedrückten Doppelkupplung mit zwei unabhängigen Verschleißnachstellungen an einem gemeinsamen Kupplungsdeckel gezeigt. Dabei handelt es sich um eine Doppelkupplung, deren Kraftkennlinie trotz Belagverschleiß weitgehend konstant bleibt. Dadurch wird gewährleistet, dass sich der Verschleiß nicht negativ auf die Eigenschaften der Doppelkupplung auswirkt. Die Doppelkupplung umfasst eine erste Kupplung 451 und eine zweite Kupplung 452. Die erste Kupplung 451 umfasst eine Kupplungsscheibe 455, die unter Zwischenschaltung eines Schwingungsdämpfers drehfest mit einer ersten Welle 456 verbunden ist. An der Kupplungsscheibe 455 sind Reibbeläge 457 angebracht, die zwischen einer Druckplatte 458 und einer Gegendruckplatte 459 einspannbar sind. Die Gegendruckplatte 459 ist fest mit einem Kupplungsdeckel 460 verbunden. Die zweite Kupplung 452 umfasst eine Kupplungsscheibe 465, die unter Zwischenschaltung eines Schwingungsdämpfers mit einer zweiten Welle 466 drehfest verbunden ist, die als Hohlwelle ausgebildet ist. An der Kupplungsscheibe 465 sind Reibbeläge 467 angebracht, die zwischen einer Druckplatte 468 und einer Gegendruckplatte 469 einspannbar sind. Die Druckplatte 458 kann über einen Stößelring 472 durch eine Tellerfeder 473 in axialer Richtung verschoben werden. Zwischen der Tellerfeder 473 und dem Kupplungsdeckel 460 ist ein Verstellring 474 angeordnet. An der dem Verstellring 474 abgewandten Seite der Tellerfeder 473 greift eine Sensorfeder 475 an, die an dem Kupplungsdeckel 460 befestigt ist. Die Druckplatte 468 kann über eine Tellerfeder 480 in axialer Richtung bewegt werden. Zwischen der Tellerfeder 480 und dem Kupplungsdeckel 460 ist unter Zwischenschaltung eines Nockens 481 ein Verstellring 482 angeordnet. An der dem Verstellring 482 abgewandten Seite der Tellerfeder 480 greift eine Sensorfeder 483 an, die an einem Bolzen 485 befestigt ist, der wiederum an dem Kupplungsdeckel 460 angebracht ist.

Die Tellerfeder 473 stützt sich an dem äußeren Verstellring 474 ab und betätigt die ihr zugeordnete Anpressplatte 458, die auch als Druckplatte bezeichnet wird, über den Stößelring 472. Die Sensorfeder 475 ist an dem Kupplungsdeckel 460 befestigt und stützt die Tellerfeder 473 gegenüber der Verstellringauflage ab. Bei Verschleiß der Kupplungsscheibe 455 beziehungsweise der Reibbeläge 457 ändert sich die Winkellage der Tellerfeder 473, wodurch die Federkräfte ansteigen. Wenn die Tellerfederkräfte größer sind als die der Sensorfeder 475, wird die Tellerfeder 473 beim Ausrücken axial verschoben. Die so zwischen der Tellerfeder 473 und dem Verstellring 474 entstehende Lücke wird von dem Verstellring geschlossen. Beim Nachstellen wird der Verstellring 474 von (nicht dargestellten) Druckfedern verdreht und durch ein Rampensystem vom Kupplungsdeckel 460 weg gegen die Tellerfeder 473 gedrückt.

Die Tellerfeder 480 wirkt direkt auf die Anpressplatte 468 der inneren Kupplung 452 und stützt sich dazu über den Nocken 481 und den Verstellring 482 an dem Kupplungsdeckel 460 ab. Der innere Verstellring 482 kann dabei die gleiche Rampe, die zum Beispiel in den Kupplungsdeckel 460 geprägt sein kann, wie der äußere. Verstellring 474 nutzen. Dabei wird der innere Verstellring 482 ebenfalls von vorgespannten Druckfedem angetrieben, um den im Betrieb auftretenden Verschleiß nachzustellen. Im Gegensatz zu dem Verstellring 482 wird der Nocken 481 durch eine Zentrierung auf den Tellerfederbolzen 485 am Verdrehen gehindert und kann somit kollisionsfrei durch die Tellerfeder 480 hindurchgreifen. Die Sensorfeder 483 des inneren Systems stützt sich ebenfalls an dem Tellerfederbolzen 485 ab. Wenn Verschleiß auftritt, werden die Sensorfeder 483 und die Tellerfeder 480, bedingt durch die geänderten Kraftverhältnisse, verschoben. Dann fehlt dem Verstellring 482 die Gegenkraft, wodurch er sich verdreht und den Nocken 481 wieder gegen die Tellerfeder 480 schiebt.

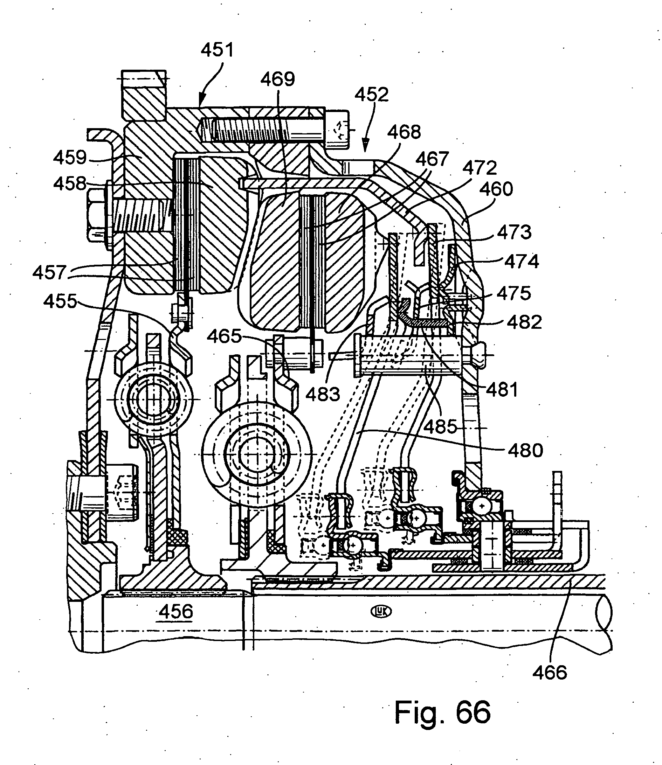

In den Figuren 66 bis 69 sind ähnliche Kupplungsaggregate wie in Figur 65 dargestellt. Gleiche Teile sind mit gleichen Bezugszeichen versehen, so dass insofern auf die Beschreibung zu Figur 65 verwiesen wird. Im Folgenden wird nur auf die Unterschiede zwischen den einzelnen Ausführungsformen eingegangen.

Das in Figur 66 dargestellte Kupplungsaggregat unterscheidet sich von dem in Figur 65 dargestellten Kupplungsaggregat durch ein anderes Sensorfederkonzept. Die Sensorfeder 475 der äußeren Kupplung 451 stützt sich auf dem Nocken 481 der inneren Kupplung 452 ab. Dadurch werden Durchgriffe an dem Stößelring 472 vermieden. Außerdem wird die Schwenkbewegung der Sensorfeder auf die Verschleißdifferenz der beiden Kupplungen verringert. Dadurch wird Bauraum eingespart. Konstruktionsbedingt muss die innere Sensorfeder 483 die Sensorkräfte der äußeren Kupplung 451 mit abstützen. Daher ist eine stärkere Feder erforderlich als bei der in Figur 65 dargestellten Ausführungsform.

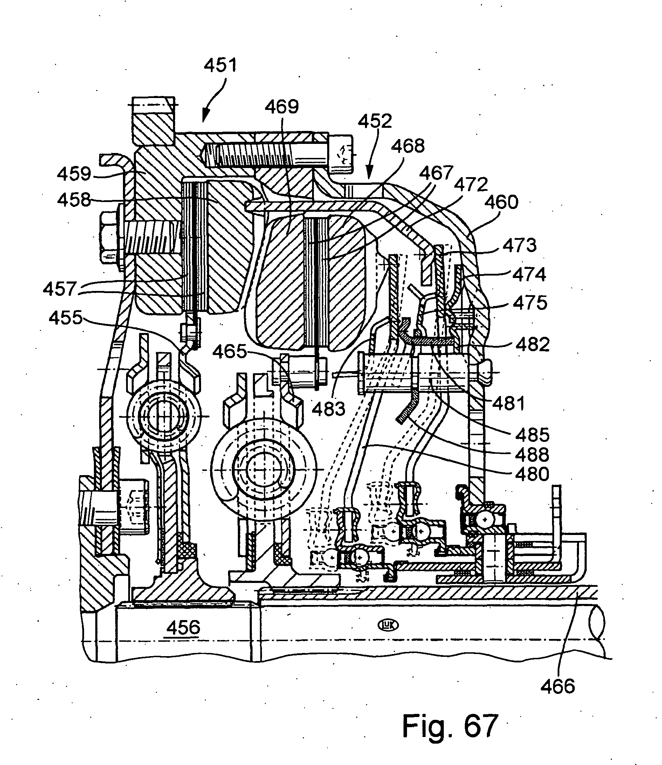

Bei der in Figur 67 dargestellten Ausführungsform stützt sich die Sensorfeder 475 der äußeren Kupplung 451 auf einer von dem Tellerfederbolzen 485 getragenen Stützscheibe 488 ab. Diese Variante ermöglicht eine konventionelle Gestaltung der Sensorfeder ohne Durchgriffe oder Doppelbelastungen, benötigt aber axial zusätzlichen Bauraum.

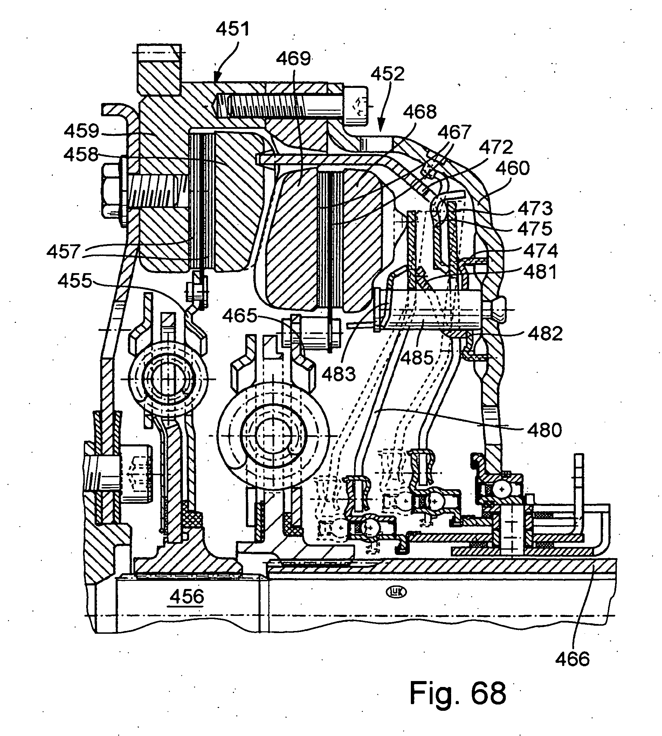

Bei der in Figur 68 dargestellten Ausführungsform lassen sich beide Verstellringe 474 und 482 durch eine zweite innerhalb der Tellerfederbolzen 485 liegende Rampe im Kupplungsdeckel 460 auf den gleichen Bolzen 485 zentrieren. Der kleinere Durchmesser des inneren Verstellrings 482 wird durch die geänderte Form des Nockens 481 ausgeglichen.

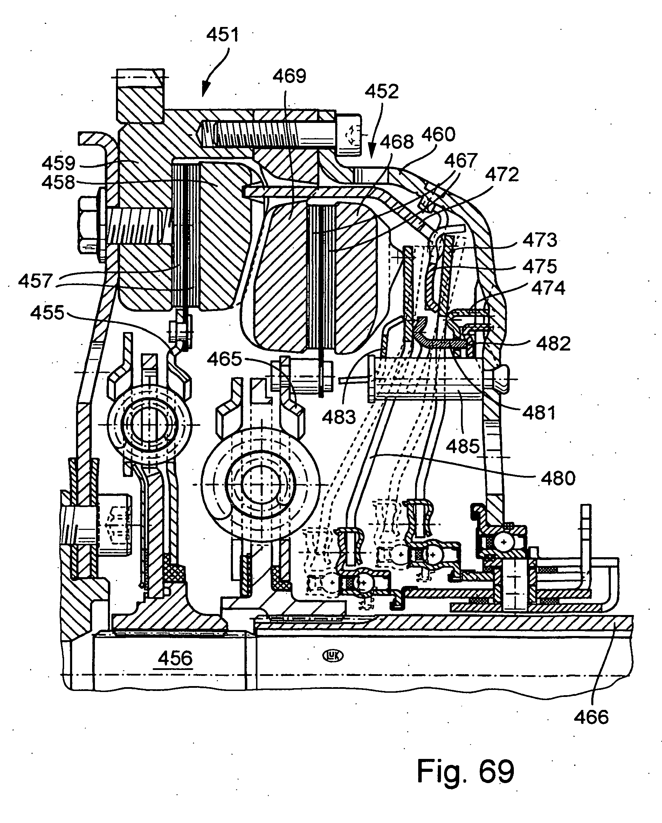

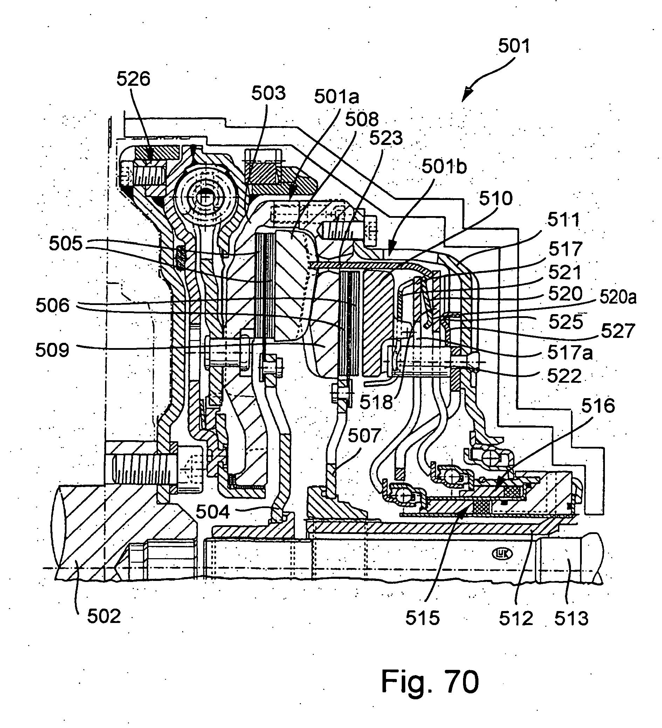

Bei dem in Figur 69 dargestellten Kupplungsaggregat stützen sich beide Verstellringe 474, 482 auf einer gemeinsamen Deckelrampe ab. Um beide Verstellringe auf den gleichen Tellerfederbolzen 485 zu zentrieren, sind diese ineinander verschachtelt. Dabei greift der Verstellring 474 der äußeren Kupplung 451 um den inneren Verstellring 482 herum. Aussparungen im äußeren Verstellring 474 ermöglichen es, dass sich der verschiebbare Nocken 481 der inneren Kupplung 452 weiterhin auf seinem Verstellring 482 abstützen kann, ohne die Verdrehung des äußeren Verstellrings 474 zu behindern. Allerdings wird für die in Figur 69 dargestellte Bauform der Verstellringe zusätzlicher axialer Bauraum benötigt. In Figur 70 ist ein Ausführungsbeispiel eines erfindungsgemäßen Kupplungsaggregates 501, welches zwei Reibungskupplungen 501 a und 501b umfasst, dargestellt.

Die Reibungskupplung 501a besitzt bei dem dargestellten Ausführungsbeispiel eine Kupplungsscheibe 504, die mit einer Getriebeeingangswelle 513 verbunden und mit einer Abtriebswelle 502 eines Motors, wie insbesondere einer Brennkraftmaschine, antriebsmäßig verbindbar ist. Die Reibungskupplung 501 b besitzt eine Kupplungsscheibe 507, die mit einer Getriebeeingangswelle 512 verbunden und mit der Abtriebswelle 502 eines Motors, wie insbesondere einer Brennkraftmaschine, antriebsmäßig verbindbar ist.

Die Kupplungsscheibe 504 ist mit ihren Reibbelägen 505 axial zwischen einer Druckplatte 503 und einer Anpressplatte 508 angeordnet. Die Kupplungsscheibe 507 ist mit ihren Reibbelägen 506 axial zwischen einer Druckplatte 509 und einer Anpressplatte 510 angeordnet. Die Druckplatten 503 und 509 sind axial und drehfest mit der Abtriebswelle 202 des Motors verbunden. Die Anpressplatten 508 und 510 sind drehfest, jedoch axial über einen gewissen Bereich bewegbar mit dem Kupplungsdeckel 511 bzw. den Anpressplatten 508 und 510 verbunden. Die Verbindung der Kupplungen 501 a und 501 b mit der Abtriebswelle 202 des Motors erfolgt im vorliegenden Ausführungsbeispiel beispielsweise über einen Dämpfer 526, der als Zweimassenschwungrad (ZMS) ausgebildet ist.

Die Betätigung einer Kupplung 501a durch eine axiale Verlagerung der Anpressplatte 508 erfolgt mittels eines Aktors 516, der über ein Betätigungselement, das vorliegend durch eine Tellerfeder 518 gebildet ist, eine axiale Bewegung der Anpressplatte 508 bewirkt. Der Aktor 516 greift hierbei an radial innenliegenden Bereichen der Tellerfeder 518 an. Die Tellerfeder 518 stützt sich an einem Bereich 520a eines ringförmigen Distanzelementes 520 ab, der gleichzeitig als Drehpunkt wirkt, um den die Tellerfeder 518 bei einer Betätigung verschwenkbar ist. Über radial äußere Bereiche der Tellerfeder 518 erfolgt mittels eines Zwischenelementes 523 die Betätigung der Anpressplatte 508 und somit der Kupplung 501a. Die Tellerfeder 518 wird auf der dem Bereich 520a des ringförmigen Distanzelementes 520 axial gegenüberliegenden Bereich durch Auflagen 525 einer Nachstelleinrichtung 527 abgestützt. Das Distanzelement 520 kann tellerfederartig ausgebildet sein.

Die Tellerfeder 518 beaufschlagt hier die Anpressplatte 508 im Sinne einer Einrückung; durch eine Betätigung mittels des Antriebes 516 wird, entgegen der Tellerfederkraft, eine axiale Bewegung der Anpressplatte 508 möglich und somit ein Ausrücken der Kupplung 501 a bewirkt.

Die Betätigung der Kupplung 501 b erfolgt mittels des Aktors 515. Die Bewegung des Aktors 515 wird über eine als tellerfederartiges Betätigungselement 517 ausgebildete Betätigungseinrichtung auf die axial bewegliche Anpressplatte 510 übertragen. Hierbei stützt sich das Betätigungselement 517 beim Schließen der Kupplung 501 b an dem ringförmigen Distanzelement 520 ab. Eine Gegenauflage auf der axial gegenüberliegenden Seite der Tellerfeder 517 wird durch den äußeren Bereich eines ringförmigen Energiespeichers 521 gebildet. Der Aktor 515 greift an radial innenliegenden Bereichen des tellerfederartigen Betätigungselementes 517 an. Das ringförmige Distanzelement 520 und der äußere Randbereich des tellerfederartigen Energiespeichers 521 bilden einen Verschwenkbereich, um den das Betätigungselement 517 verschwenkbar ist. Radial weiter innenliegende Bereiche 517a des Betätigungselementes 517 liegen an Auflagebereichen der Anpressplatte 510 an.

Der ringförmige Energiespeicher 521 ist als sogenannte Sensorfeder ausgebildet. Der ringförmige Energiespeicher 521 stützt sich bei dem dargestellten Ausführungsbeispiel mit radial inneren Bereichen an einer Mehrzahl von mit dem Gehäuse 511 verbundenen Abstützungen in Form von Abstandsbolzen 522 ab.

Die als Betätigungselement 517 dienende Tellerfeder ist vorzugsweise derart ausgestaltet, dass diese die Tendenz hat, eine kegelstumpfförmige, entspannte Lage einzunehmen, die eine Entlastung der Anpressplatte 510 bewirkt. Es soll also die Reibungskupplung 501 b derart ausgestattet sein, dass diese über das tellerfederartige Betätigungselement 517 zwangsweise geschlossen wird. Dies erfolgt, indem auf die radial inneren Zungenspitzen des tellerfederartigen Betätigungselementes 517 mittels des Aktors 515 eine entsprechende Schließkraft ausgeübt wird. Bei geschlossener Reibungskupplung 501b beaufschlagt das tellerfederartige Betätigungselement 517 die Anpressplatte 510 und stützt sich gleichzeitig mit radial äußeren Bereichen an dem Distanzelement 520 ab, welches seinerseits wiederum sich über radial innere Bereiche 520a an der Tellerfeder 518 abstützt. Letztere Abstützung erfolgt auf einem Durchmesser; der zumindest annähernd mit demjenigen Durchmesser übereinstimmt, auf dem sich die Tellerfeder 518 am Nachstellring 527 abstützt.

Ein an den Reibbelägen 505, 506 der Kupplungsscheiben 504, 507. auftretender Verschleiß kann mittels der zwischen der Tellerfeder 518 und dem Kupplungsgehäuse 511 wirksamen Nachstelleinrichtung 527 zumindest teilweise kompensiert werden. Es ist also im vorliegenden Falle für beide Reibungskupplungen 501 a, 501 b lediglich eine Nachstelleinrichtung 527, zu der auch der als Sensorfeder ausgebildete Energiespeicher 521 gehört, notwendig.

Ein unterschiedlicher Belagverschleiß an den Reibbelägen 505 und 506 bewirkt zwar eine geringe Änderung der axialen, idealen Zungenspitzenposition bzw. des Verspannungszustandes der Tellerfeder 517, diese kann jedoch innerhalb eines bestimmten Bereiches hingenommen werden bzw. durch den Aktor 515 entsprechend ausgeglichen werden. Dieser Bereich kann beispielsweise in Bezug auf die Idealposition der Zungenspitzen in der Größenordnung von ± 1 mm liegen. Sofern infolge einer Veränderung des Verspannungszustandes-der Tellerfeder die Verlagerung der Zungenspitzen gegenüber der Idealposition einen unzulässig großen Wert einnimmt bzw. einen Grenzwert erreicht, kann auch durch einen gezielt erzeugten Verschleiß an den entsprechenden Reibbelägen der Reibungskupplung 501 a oder 501 b die axiale Position der entsprechenden Zungenspitzen korrigiert werden. Ein derartiger Verschleiß kann durch Einstellung eines gezielten Schlupfes innerhalb zumindest einer der Reibungskupplungen erfolgen. Die Funktionen der Nachstellung sowie ein Verfahren zur Korrektur von evtl. auftretenden, unzulässig großen Abweichungen von Zungenspitzenpositionen ist in der DE 101 16 705 A1 beschrieben. Es wird ausdrücklich auf diese Veröffentlichung verwiesen, so dass eine diesbezüglich ausführliche Beschreibung in der vorliegenden Anmeldung nicht erforderlich ist.

Die mit der Anmeldung eingereichten Patentansprüche sind Formulierungsvorschläge ohne Präjudiz für die Erzielung weitergehenden Patentschutzes., Die Anmelderin behält sich vor, noch weitere, bisher nur in der Beschreibung und/oder Zeichnungen offenbarte Merkmalskombination zu beanspruchen.

In Unteransprüchen verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen.

Da die Gegenstände der Unteransprüche im Hinblick auf den Stand der Technik am Prioritätstag eigene und unabhängige Erfindungen bilden können, behält die Anmelderin sich vor, sie zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Die Ausführungsbeispiele sind nicht als Einschränkung der Erfindung zu verstehen. Vielmehr sind im Rahmen der vorliegenden Offenbarung zahlreiche Abänderungen und Modifikationen möglich, insbesondere solche Varianten, Elemente und Kombinationen und/oder Materialien, die zum Beispiel durch Kombination oder Abwandlung von einzelnen in Verbindung mit den in der allgemeinen Beschreibung und Ausführungsformen sowie den Ansprüchen beschriebenen und in den Zeichnungen enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell-, Prüf- und Arbeitsverfahren betreffen.

## Patentansprüche

1. Kupplungsaggregat zur Drehmomentübertragung zwischen einem Motor und einem Getriebe, mit mindestens einer Reibungskupplung (1), insbesondere für Kraftfahrzeuge, mit einer Druckplatte (3), die drehfest, jedoch axial begrenzt verlagerbar in einem Gehäuse (2) angeordnet ist, wobei zwischen Gehäuse (2) und Druckplatte (3) eine Tellerfeder (4) wirksam ist, durch weiche die Druckplatte (3) in Richtung einer zwischen dieser und einer Gegendruckplatte (6) einklemmbaren Kupplungsscheibe (8) mit Reibbelägen (7) beaufschlagbar, und die Kupplung (1) über Betätigungsmittel ein- und ausrückbar ist, und mit einer den Verschleiß wenigstens der Reibbeläge (7) der Kupplungsscheibe (8) selbsttätig kompensierenden Nachstelleinrichtung (16), wobei an der Druckplatte (3) mindestens ein Stift (21) insbesondere in einer Richtung axial bewegbar gelagert ist, dessen Länge so gewählt ist, dass er im eingerückten Zustand der Kupplung (1) mit einem Ende an der Gegendruckplatte. (6) und im ausgerückten Zustand der Kupplung (1) an dem Gehäuse (2) anliegt, **dadurch gekennzeichnet, dass** an dem dem Gehäuse zugewandten Ende des Stifts (21) ein Bügel (30) befestigt ist, dessen freies Ende zwischen der Tellerfeder und dem Gehäuse angeordnet ist..

2. Kupplungsaggregat nach Anspruch 1, **dadurch gekennzeichnet, dass** die Nachstelleinrichtung (16) ein Verstellring-Rampensystem umfasst.

3. Kupplungsaggregat nach einem der Ansprüche 1 oder 2, **dadurch gekennzeichnet, dass** im äußeren Randbereich der Tellerfeder (4) mindestens eine Durchgangsöffnung - vorgesehen ist, durch die ein Bolzen (15) ragt, der an dem Gehäuse (2) befestigt ist.

4. Kupplungsaggregat nach Anspruch 3, **dadurch gekennzeichnet, dass** im äußeren Randbereich der Tellerfeder (4) mindestens eine in axialer Richtung vorgespannte Druckfeder (33, 63) zwischen der Tellerfeder (4) und dem Gehäuse (2) eingespannt ist.

5. Kupplungsaggregat nach einem der vorhergehenden Ansprüche, **dadurch gekennzeichnet, dass** innen an dem Gehäuse (2) ein Anschlag (46, 61) für die Tellerfeder (4) im ausgerückten Zustand vorgesehen ist.

## Claims

1. Clutch unit for transmission of torque between an engine and a transmission, having at least one friction clutch (1), in particular for motor vehicles, with a pressure plate (3) that is situated in a housing (2) so that it is rotationally fixed but capable of limited axial movement, there being a diaphragm spring (4) acting between the housing (2) and the pressure plate (3) whereby pressure may be applied to the pressure plate (3) in the direction of a clutch disk (8) with friction linings (7) which is clampable between the pressure plate and an opposing pressure plate (6), and the clutch (1) being engageable and disengageable by actuating means, and having an adjusting apparatus (16) that automatically compensates for the wear of at least the friction linings (7) of the clutch disk (8), there being at least one pin (21) mounted on the pressure plate (3) so that it is axially movable in particular in one direction, whose length is chosen so that it bears against the counterpressure plate (6) with one of its ends when the clutch (1) is engaged and against the housing (2) when the clutch is disengaged, **characterized in that** there is a strap (30) attached to the end of the pin (21) facing the housing, whose free end is situated between the diaphragm spring and the housing.

2. Clutch unit according to Claim 1, **characterized in that** the adjusting apparatus (16) includes an adjusting ring ramp system.

3. Clutch unit according to one of Claims 1 or 2, **characterized in that** in the outer edge area of the diaphragm spring (4) at least one through opening is provided, through which a pin (15) projects that is attached to the housing (2).

4. Clutch unit according to Claim 3, **characterized in that** in the outer edge area of the diaphragm spring (4) at least one compression spring (33, 63) that is pre-stressed in the axial direction is clamped between the diaphragm spring (4) and the housing (2).

5. Clutch unit according to one of the preceding claims, **characterized in that** on the inside of the housing (2) a stop (46, 61) is provided for the diaphragm spring (4) in the disengaged state.

## Revendications

1. Groupe d'embrayage pour la transmission du moment entre un moteur et une boîte de vitesses, avec au moins un embrayage à friction (1), en particulier pour des véhicules à moteur, avec un plateau de poussée (3), qui est placé de manière fixe à la rotation, mais pouvant être cependant positionné de manière limitée axialement dans un corps (2), un ressort à diaphragme (4) entrant en action entre le corps (2) et le plateau de poussée (3), grâce auquel le plateau de poussée (3) peut être sollicité avec des garnitures de friction (7) en direction d'un disque d'embrayage (8) pouvant être bloqué entre celui-ci et un contre plateau de poussée (6) et l'embrayage (1) pouvant être embrayé et débrayé par l'intermédiaire de moyens d'actionnement, et avec un dispositif d'ajustage (16) compensant de manière autonome l'usure des garnitures de friction (7) du disque d'embrayage (8) au moins, sur le plateau de poussée (3) étant placée au moins une tige (21) de manière mobile axialement, en particulier dans une direction, dont la longueur est choisie de façon à ce qu'elle s'appuie, lorsque l'embrayage (1) est embrayé, avec une extrémité contre le contre plateau de poussée (6) et, lorsque l'embrayage (1) est débrayé, contre le corps (2) .

2. Groupe d'embrayage selon la revendication 1, **caractérisé en ce que** le dispositif d'ajustage (16) comprend un système de rampe à anneaux d'ajustage.

3. Groupe d'embrayage selon l'une des revendications 1 ou 2, **caractérisé en ce que** dans la zone de bordure extérieure du ressort à diaphragme (4) est prévu au moins un orifice de passage à travers lequel dépasse une cheville (15), qui est fixée sur le corps (2).

4. Groupe d'embrayage selon la revendication 3, **caractérisé en ce que** dans la zone de bordure extérieure du ressort à diaphragme (4) est tendu au moins un ressort de pression (33, 63) précontraint en direction axiale entre le ressort à diaphragme (4) et le corps (2).

5. Groupe d'embrayage selon l'une quelconque des revendications précédentes, **caractérisé en ce que**, à l'intérieur sur le corps (2), est prévue une butée (46, 61) pour le ressort à diaphragme (4) à l'état débrayé.
